# EUROPÄISCHE PATENTANMELDUNG

(11) **EP 3 536 402 A1**
(43) Veröffentlichungstag der Anmeldung: **11.09.2019**
(21) Anmeldenummer: 18160916.5
(22) Anmeldetag: 09.03.2018
(51) Int. Cl.: B01L 3/00, B29C 47/06, C12M 3/06, C12M 1/00, C12M 1/12

(54) **PROBENKAMMER**

(71) Anmelder: Ibidi Gmbh, 82152 Martinsried (DE)
(72) Erfinder: Schwarz, Jan, 82131 Stockdorf (DE)
(74) Vertreter: Grünecker Patent- und Rechtsanwälte PartG mbB

(57) **Zusammenfassung**

Probenkammer umfassend ein erstes Bauteil, ein damit verbundenes zweites Bauteil und ein Probenreservoir, welches von dem ersten und dem zweiten Bauteil begrenzt wird, wobei die Seitenwände und/oder die Decke des Probenreservoirs durch das erste Bauteil und der Boden des Probenreservoirs durch das zweite Bauteil ausgebildet sind, wobei der Boden des Probenreservoirs eine planare Fläche umfasst, die eine Beschichtung aufweist, und wobei die Beschichtung von einer Oligomer- und/oder Polymerschicht gebildet wird, welche Zell- und/oder Biomolekül-abweisend ist.

## Beschreibung

Die Erfindung betrifft eine Probenkammer, sowie ein Verfahren zur Herstellung einer solchen Probenkammer.

Insbesondere im Bereich der Zellmikroskopie sind unterschiedlichste Formen von Probenkammern bekannt. Solche Probenkammern können dabei Strukturen zum Aufnehmen einer Probe, beispielsweise in Form von Mikrofluidkanälen oder Reservoiren, aufweisen. Beispiele für solche Probenkammern sind in der EP 1 886 792 A2, der WO 2008/149914 A2, der WO 2005/079985 oder der DE 101 48 210 gezeigt. Einfache und sehr bekannte Formen umfassen Petrischalen und Multiwellplatten, wie in der DIN EN ISO 24998 oder der ANSI/SBS 2-2004 für Microplates beschrieben.

Die WO 2016/050980 A1 beschreibt ein Verfahren, bei dem ein Adhäsionsmuster auf eine Polymerschicht aufgebracht wird. Aus der WO 03/012077 ist ein Verfahren bekannt, welches die Adhäsion von Zellen in Lösung an Oberflächen verhindert, wobei hier auch Zell-Zell-Kontakte verhindert werden. Die MX 2014011008 beschreibt eine Vorrichtung für das mikrostrukturierte Aufbringen von Molekülen auf ein Substrat.

Aus der US 2015/0240115 A1 ist ein Verfahren bekannt, mit dem eine Beschichtung auf ein Polymersubstrat aufgetragen werden kann. Die US 6,818,018 B1 beschreibt Zusammensetzungen und Verfahren zur Bildung von Hydrogelen durch eine Kombination physikalischer und chemischer Vernetzungsprozesse. Die US 2014/0322742 A1 beschreibt eine Vorrichtung und ein Verfahren um dreidimensionale, mehrzellige Strukturen in vitro herzustellen, wobei mindestens eine solche Struktur auf einer zweidimensionalen Ädhasionsstruktur immobilisert wird.

Aus der US 2005/0279730 A1 ist ein Verfahren zur Produktion eines Zellkultursubstrats bekannt, welches Zellen präzise auf einem Basismaterial adhärieren lässt. Die WO 02/072797 A2 beschreibt die Herstellung eines Zellkultursubstrates mit verbesserter Zelladhäsion durch Bestrahlung eines Kunststoffes mit UV-Strahlung. Die WO 2014/118311 A1 offenbart eine Vorrichtung, die eine Vielzahl von zelladhäsiven Mustern auf einer Oberfläche anbietet. Die WO 2005/026313 A1 beschreibt ein Verfahren und eine Vorrichtung zur präzisen Kontrolle der Verteilung der Adhäsion von Zellen. Aus der WO 2016/069892 A1 sind Mikrotiterplatten bekannt, bei denen die Näpfchen nicht-haftende Oberflächen besitzen.

Die WO 2013/042360 A1 beschreibt eine Zellkulturvorrichtung, die eine zellabweisende Oberfläche besitzt. Aus der WO 2014/179196 A1 ist eine Vorrichtung für die Zellkultur von Sphäroiden bekannt, welche Näpfchen mit rundem Boden und einer zellabweisenden Beschichtung aufweist. Die US 5002582 A beschreibt ein Verfahren, bei dem Polymere kovalent an Oberflächen gebunden werden. Aus der US 2005/0287218 A1 ist ein Biomaterial bekannt, welches durch das Vernetzen eines Makromoleküls entsteht. Die US 4978713 A1 offenbart eine Kontaktlinse aus einem Polymer eines Polyvinylalkohol-Derivats.

Die US 2013/018110 A1 beschreibt ein Verfahren zur Herstellung eines Hydrogels aus einem hydrophilen Polymer. Aus der US 2001/056301 A1 sind biomedizinische Gegenstände bekannt, die aus Makromolekülen mit Polymer-Backbones hergestellt werden. Die EP 027405960 A2 offenbart ein Plastiksubstrat, auf dem eine Acrylbeschichtung photochemisch aufgebracht ist. Aus der DE 10149587 A1 ist ein Verfahren zur Herstellung von photoreaktiven beschichteten Polymermembranen bekannt. Die WO 03/093329 A1 offenbart ein System zur photochemischen Beschichtung von Behältern aus einem thermoplastischen Polymer.

Aus der WO 2005/040294 ist eine auf Organosilanen basierte Verbindung zur Herstellung einer Gasbarrierenschicht bekannt. Die WO 2009/091224 A2 beschreibt ein Verfahren zur Herstellung eines optischen Films für ein Flüssigkristalldisplay mittels photochemischer Vernetzung. Aus der US 2009/226629 A1 ist ein Verfahren zur Herstellung eines Displaysubstrats mittels der Bestrahlung eines photoreaktiven Monomers mit UV-Strahlung bekannt.

Die Aufgabe der Erfindung ist es, eine Probenkammer zur Verfügung zu stellen, welche eine verbesserte Kontrolle des Zellwachstums ermöglicht.

Diese Aufgabe wird durch eine Probenkammer gemäß Anspruch 1 gelöst.

Die erfindungsgemäße Probenkammer umfasst ein erstes Bauteil und ein damit verbundenes zweites Bauteil, sowie ein Probenreservoir, welches von dem ersten Bauteil und dem zweiten Bauteil begrenzt wird. Erfindungsgemäß sind die Seitenwände und/oder die Decke des Probenreservoirs durch das erste Bauteil, und der Boden des Probenreservoirs durch das zweite Bauteil ausgebildet. Dabei umfasst der Boden des Probenreservoirs einer planare Fläche, die eine Beschichtung aufweist, welche von einer Oligomer- und/oder Polymerschicht gebildet wird, welche Zell- und/oder Biomolekül-abweisend ist.

"Zell- und/oder Biomolekül-abweisend" bedeutet hier, dass an der Oligomer- und/oder Polymerschicht keine Adhäsion von Zellen oder Biomolekülen stattfindet. Biomoleküle sind Moleküle, welche in biochemischen Prozessen, insbesondere in natürlich vorkommenden Prozessen, gebildet werden.

Die Begriffe "Seitenwände", "Decke" und "Boden" bezeichnen die Anordnung der Bauteile bei bestimmungsgemäßer Benutzung.

Unter einer planaren Fläche ist eine Fläche zu verstehen, die keine absichtlich eingearbeiteten Vertiefungen oder Erhebungen, wie beispielsweise Näpfchen oder Kavitäten einer Mikrotiterplatte, aufweist.

Insbesondere kann die Beschichtung strukturiert sein. Die Strukturierung der Beschichtung wird dadurch verursacht, dass die Beschichtung den planaren Bereich nicht vollständig bedeckt und/oder dadurch, dass die Oberfläche der Beschichtung strukturiert ist, d.h. Erhebungen und/oder Vertiefungen aufweist. Durch die strukturierte Beschichtung kann der Herstellungsprozess der Probenkammer vereinfacht und flexibler werden, da eine Ausführungsform des unbeschichteten zweiten Bauteils mittels geeigneter Strukturierung der Beschichtung an eine Vielzahl von Anwendungen angepasst werden kann.

Die planare Fläche kann mindestens einen vorherbestimmten Zelladhäsionsbereich umfassen, der nicht von der Oligomer- und/oder Polymerschicht bedeckt ist. Durch den Zelladhäsionsbereich wird die Beschichtung strukturiert. In dem Zelladhäsionsbereich ist Adhäsion von Zellen möglich. Der Zelladhäsionsbereich kann dabei die Form von Kreisflächen, polygonen Flächen, zweidimensionalen Linien oder einer Kombination dieser Elemente haben.

Ein solcher Zelladhäsionsbereich in der planaren Fläche ist besonders vorteilhaft für die Beobachtung der Zellen, insbesondere mittels inverser Mikroskopie durch den Boden der Probenkammer. Es treten beispielsweise keine zusätzlichen unerwünschten Reflektions- oder Brechungseffekte auf, die durch eine Strukturierung wie sie beispielsweise in einer Mikrotierplatte vorhanden ist, hervorgerufen werden können. Auch wird eine mögliche Beeinträchtigung der optischen Beobachtung durch die Beschichtung verhindert.

Weiterhin kann die die planare Fläche eine Vielzahl von Zelladhäsionsbereichen und/oder Beschichtungsbereichen umfassen. Insbesondere kann die Anordnung der Zelladhäsionsbereiche und/oder Beschichtungsbereich ein regelmäßiges Muster bilden.

So kann beispielsweise erreicht werden, dass in einem Probenreservoir eine Vielzahl von vergleichenden Experimenten parallel ausgeführt werden kann, bei denen Zellen in den unterschiedlichen Zelladhäsionsbereichen gleiche Wachstumsbedingungen vorfinden.

Wenn die Zelladhäsionsbereiche vollständig von der Beschichtung begrenzt werden, vereinfacht dies die Bestimmung der genauen Wachstumsfläche, da keine Zelladhäsion an den durch die Beschichtung gebildeten Wände der Zelladhäsionsbereiche stattfindet, das heißt, die Wachstumsfläche ist mit der Grundfläche des Zelladhäsionsbereichs identisch. Dies ist vorteilhaft für Anwendungen, in denen ein spezifisches Verhältnis der Wachstumsfläche zum Volumen des Wachstumsmediums gewünscht ist.

Herkömmliche Probenkammern, beispielsweise die µ-Slide 2-Well Co-Culture der ibidi GmbH, bieten zwar ebenfalls eine Unterteilung eines Reservoirs in mehrere Wachstumsbereiche, doch wird diese Unterteilung durch eine dreidimensionale Strukturierung des Reservoirbodens erreicht. Durch das erfindungsgemäße Ausbilden der Vielzahl von Zelladhäsionsbereichen mittels der Beschichtung entfällt also die Notwendigkeit für eine strukturelle Änderung des Reservoirbodens, was den Herstellungsprozess vereinfacht und flexibler macht, da eine Ausführungsform des unbeschichteten zweiten Bauteils mittels geeigneter Beschichtung an eine Vielzahl von Anwendungen angepasst werden kann.

Die Flächengröße der Zelladhäsionsbereiche kann im Bereich 1950 µm² bis 315 mm² liegen. Insbesondere können die Länge und/oder Breite der Zelladhäsionsbereiche im Bereich von 50 µm bis 20000 µm liegen. Die Flächengröße der Zelladhäsionsbereiche kann auch im Bereich von 0,7 µm² bis 785000 µm² liegen. Insbesondere können die Länge und/oder Breite der Zelladhäsionsbereiche im Bereich von 1 µm bis 1000 µm liegen. So kann in jeweils einem Zelladhäsionsbereich eine Vereinzelung einer Zelle beziehungsweise eines Zellaggregats erreicht werden.

Der Abstand zwischen zwei benachbarten Zelladhäsionsbereichen kann sich entlang einer Richtung monoton ändern. Insbesondere kann sich der kürzeste Abstand zwischen den Rändern der benachbarten Zelladhäsionsbereiche ändern. Alternativ oder zusätzlich kann sich die Größe zweier benachbarter Zelladhäsionsbereiche entlang dieser Richtung monoton ändern. Insbesondere können solche Änderungen einen streng monotonen Verlauf haben. Die Begriffe "monoton" und "streng monoton" werden hier in ihrer üblichen mathematischen Bedeutung verwendet. Es ist auch möglich, dass sich die Änderungen abschnittsweise streng monoton verhalten, d.h., es kann sein, dass der Abstand benachbarter Zelladhäsionsbereiche entlang der Richtung über eine erste Anzahl von Adhäsionsbereichen streng monoton abnimmt, ein lokales Minimum erreicht, und danach wiederum über eine zweite Anzahl m von Adhäsionsbereichen streng monoton zunimmt, oder umgekehrt. Dabei können die erste Anzahl und die zweite Anzahl verschieden sein. Sie können auch gleich sein. Insbesondere können die erste und die zweite Anzahl größer als 10 sein.

Durch eine solche Änderung der Abstände und/oder Differenz der Flächen benachbarter Zelladhäsionsbereiche kann sich entlang der Richtung die Summe der Flächen der einzelnen Zelladhäsionsbereiche, also die für Adhäsion zur Verfügung stehende Gesamtfläche, ändern. Dies kann beispielsweise dazu verwendet werden, die Zellkonzentration im Probenreservoir entlang dieser Richtung zu kontrollieren, da diese sich proportional zu der Dichte der Zelladhäsionsbereiche verhält. Mit anderen Worten kann so ein Gradient der Zellkonzentration im Probenreservoir entlang der Richtung gebildet werden. Auf dieselbe Art und Weise kann ein solcher Gradient auch in weitere Richtungen gebildet werden, die parallel zu der planaren Fläche sind. Insbesondere kann die Änderung in mindestens zwei Richtungen derart gestaltet sein, dass ein radialer Zellkonzentrationsgradient entsteht, d.h., die Zellkonzentration hat an einer Stelle einen Maximal- oder Minimalwert, und sie wird ausgehend von dieser Stelle in alle Richtungen, die parallel zu der planaren Fläche sind, kleiner beziehungsweise größer.

Die Beschichtung kann weiterhin eine oder mehrere lokal begrenzte Vertiefungen umfassen, wobei der Boden jeder Vertiefung durch die Beschichtung gebildet wird. Mit anderen Worten werden durch die Vertiefungen keine unbeschichteten Bereiche des Bodens freigelegt. Insbesondere können die Vertiefungen derart gestaltet sein, dass sich dort Zellen sammeln und Zellaggregate ausbilden können. Der Umfang der Vertiefungen kann ovale und/oder polygone Form aufweisen. Der Vertiefungen können insbesondere eine Fläche im Bereich von 1950 µm² bis 3,15 mm² aufweisen. Insbesondere können die Länge und/oder Breite der Vertiefungen im Bereich von 50 µm bis 2000 µm liegen

In solchen Vertiefungen können sich, beispielsweise aufgrund der Schwerkraft, Zellen ansammeln. Da die zellabweisende Beschichtung den Zellen keine Möglichkeit zur Adhäsion, also zum Ausbildung von Kontakten mit der Beschichtung bietet, wird die Bildung von Zell-Zell-Kontakte gefördert. Dies ist beispielsweise für Untersuchungen der Zellinteraktion verschiedener Zelltypen, oder auch für die Untersuchung von Zellen, die aufgrund eines möglichen Differenzierungsreizes nicht adhärieren dürfen, beispielsweise von Stammzellen, vorteilhaft.

Die Beschichtung kann eine konstante Schichtdicke von weniger als 1 µm, insbesondere von weniger als 500 nm aufweisen. Wenn die Beschichtung Vertiefungen aufweist, die durch eine Änderung der Schichtdicke gebildet werden, wobei die Schichtdicke außerhalb der Vertiefungen eine konstante Schichtdicke von bis zu 2000 µm aufweist, und im Bereich der Vertiefungen eine Schichtdicke von weniger als 1 µm, insbesondere weniger als 500 nm aufweist. Mit einer "konstanten Schichtdicke" ist hier gemeint, dass die Beschichtung im Wesentlichen über die gesamte beschichtete Fläche eine konstante Dicke aufweist. Der Begriff "konstante Schichtdicke" schließt aber nicht aus, dass, insbesondere im Randbereich der Beschichtung, herstellungsbedingte Schwankungen der Schichtdicke auftreten können. Diese Schwankungen können insbesondere weniger als 15% der konstanten Schichtdicke betragen.

Eine Schichtdicke von weniger als 1 µm, insbesondere weniger als 500 nm, ist vorteilhaft, um im bestimmungsgemäßen Gebrauch hochauflösende Mikroskopie durch den Boden der Probenkammer betreiben zu können, da dann die optischen Eigenschaften des Bodens nicht oder nur geringfügig beeinträchtigt werden.

Die Beschichtung kann weiterhin entlang und direkt angrenzend an eine Seitenwand des Probenreservoirs verlaufen. Dabei kann die Beschichtung eine Breite von 1 µm bis 10 µm aufweisen. Sie kann in diesem Bereich keine Vertiefungen aufweisen. Mit anderen Worten kann die Beschichtung eine Barriere zwischen der Seitenwand und einem Zelladhäsionsbereich oder einer Vertiefung in der Beschichtung bilden. Da sich die Zellen im bestimmungsgemäßen Gebrauch der Probenkammer aufgrund der Schwerkraft auf dem Boden des Probenreservoirs sammeln, wird durch eine solche Strukturierung der Beschichtung verhindert, dass sich die Zellen in der Nähe der Seitenwand ansammeln; daher wird auch eine Adhäsion an die Seitenwand unterdrückt, ohne dass diese beschichtet werden muss.

Die vorstehend beschriebenen Strukturierungen können mit jeder der im Folgenden beschriebenen Zusammensetzung und Eigenschaften der Beschichtung kombiniert werden.

Die Beschichtung kann hydrophile Eigenschaften besitzen und/oder nicht-toxisch sein. Insbesondere kann die Beschichtung nicht zytotoxisch sein. Insbesondere kann die Beschichtung einen Wasserkontaktwinkel von < 50° besitzen. Durch die hydrophilen Eigenschaften kann das Befüllen des Probenreservoirs mit einer Zellwachstumslösung, welche typischerweise wässrige Eigenschaften aufweist, verbessert werden. Eine fehlende Toxizität für Zellen ist vorteilhaft, da diese dann auch bei einem Kontakt mit der Beschichtung keinen Schaden nehmen.

Die Beschichtung kann auch amphotere Eigenschaften besitzen. Sie kann auch hydrophobe Eigenschaften besitzen. Insbesondere kann die Beschichtung einen Wasserkontaktwinkel von > 80° besitzen. Sie kann auch super-hydrophobe Eigenschaften aufweisen. Insbesondere kann sie einen Wasserkontaktwinkel von > 130° besitzen.

Die Wasserkontaktwinkel können mittels einer Tropfenkonturanalyse, beispielsweise mittels der Sessile-Drop-Methode, bestimmt werden. Dafür kann beispielsweise ein optisches Kontaktwinkel (OCA) Messsystem verwendet werden. Dies kann zum Beispiel ein Gerät aus der OCA Serie mit SCA20 Software der Firma Dataphysics, oder ein ähnliches Gerät sein.

Die Beschichtung kann hydrophile Oligomere und/oder Polymere umfassen. Insbesondere kann sie Polyether und/oder Polyole und/oder Polyamide und/oder Polymethacrylate und/oder Poly(hydroxymethyl)methacrylate und/oder Polysaccharide und/oder Polyamine und/oder Polypeptide oder Kombinationen der genannten umfassen oder daraus bestehen. Die Polymere können Bestandteil von linearen oder verzweigten hydrophilen Blockpolymeren sein. Hydrophile Blockpolymere können insbesondere Polyoxamere oder Polyoximine sein. Insbesondere kann die Beschichtung Polyvinylalkohol (PVA) umfassen. Insbesondere kann die Beschichtung von PVA gebildet werden.

Die Beschichtung kann auch amphotere Oligomere und/oder Polymere umfassen. Insbesondere kann sie Betaine, Acralamide, N-Isopropylacrylamide, Methacrylate, Sulfoethylmethacrylate, Sulfopropylmethacrylate, Itaconsäure, Trimethylammonium-Chloride oder Kombinationen der genannten umfassen oder daraus bestehen.

Die Beschichtung kann weiterhin hydrophobe Oligomere und/oder Polymere umfassen. Insbesondere kann sie gesättigte oder ungesättigte Alkanketten mit Kettenlängen von mehr als 3 Kohlenstoffatomen umfassen oder daraus bestehen. Alternativ oder zusätzlich kann sie fluorierte gesättigte oder ungesättigte Alkanketten mit Kettenlängen von mehr als 3 Kohlenstoffatomen, und/oder verzweigte bzw. Verzweigungen aufweisende gesättigte oder ungesättigte Alkanketten mit Kettenlängen von mehr als 3 Kohlenstoffatomen aufweisen.

Die Beschichtung kann aus einem oder mehreren der oben genannten Materialen aufweisen. Sie kann in allen beschichteten Bereichen aus demselben Material bestehen. Sie kann aber auch in unterschiedlichen Bereichen aus unterschiedlichen Materialien bestehen.

Die Beschichtung kann als Monolayer-, Multilayer- oder vernetzte Gelbeschichtung vorliegen. Hierbei ist unter einer vernetzten Gelbeschichtung eine Multilayerbeschichtung zu verstehen, bei der die einzelnen Schichten zusätzlich untereinander vernetzt sind.

Die Beschichtung kann kovalent an das zweite Bauteil gebunden oder an dem zweiten Bauteil adsorbiert sein. Unter Adsorption ist hierbei eine unspezifische, nicht-kovalente Bindung der Beschichtung an die Oberfläche zu verstehen. Nicht kovalente Bindungen umfassen insbesondere ionische, Wasserstoffbrücken-, hydrophobe Wechselwirkungs-, Koordinations- und Van-der-Waals-Bind ungen.

Die Oberfläche der Beschichtung kann weiterhin in vorherbestimmten Bereichen Moleküle und/oder Oligomere und/oder Polymere umfassen, an denen Zelladhäsion möglich ist. Diese Moleküle und/oder Oligomere und/oder Polymere werden im Folgenden unter dem Begriff "funktionale Moleküle" zusammengefasst, und die Bereiche als "funktionalisierte Bereiche" bezeichnet. Die Funktionalisierung, also die Bereitstellung der funktionalen Moleküle, kann durch nass- oder photochemische Behandlung der Beschichtung erfolgen.

Um die funktionalen Moleküle in den zu funktionalisierenden Bereichen zu binden, kann die Beschichtung in den Bereichen Heteroatome oder reaktiven Kohlenstoffverbindungen umfassen. Die Heteroatome können insbesondere Sauerstoff (O), Stickstoff (N), oder Schwefel (S) sein. Die Heteroatome können insbesondere in Hydroxylgruppen (R-OH), Ethern (R-O-R), Carbonylgruppen (HC=OR), Carboxylgruppen (R-COOH), Estern (R-COO-R), Epoxiden, Thiolen (R-SH), Thioethern (R-S-R), Aminen (R-NR₂), Cyanaten, Isothiocynaten, N-Hydroxysuccinimid(NHS)-Estern, Sulfo-NHS-Estern, Maleimid- oder Sulfo-Maleimid-Estern oder Acrylaten vorliegen. Reaktive Kohlenstoffverbindungen können terminale oder gespannte Alkine, terminale oder gespannte Alkene, oder Alkene in Michael-Systemen sein. Insbesondere kann die Beschichtung in den zu funktionalisierenden Bereichen terminale oder gespannte Alkine umfassen. Die Bindung der Heteroatome oder reaktiven Kohlenstoffverbindungen, insbesondere der terminalen oder gespannten Alkine, an die Beschichtung kann insbesondere über photochemische Prozesse hergestellt werden.

Insbesondere können die funktionalisierten Bereiche für spezifische Reaktionen funktionalisiert sein. Beispielsweise können die Bereiche für die Bindung von Proteinen funktionalisiert werden. Die Bereiche können auch für orthogonale, insbesondere bioorthogonale, Bindungen funktionalisiert werden. Unter einer orthogonalen Reaktion ist hierbei eine Reaktion zu verstehen, bei denen im physiologischen Milieu keine Nebenreaktionen auftreten. Bei einer bioorthogonalen Reaktion treten keine Nebenreaktionen auf, welche die Interaktion von Zellen mit Biomolekülen und anderen Zellen beeinflussen. Bioorthogonalen Bindungen sind daher für die Zellbindung an die Beschichtung vorteilhaft.

Funktionale Moleküle für die Bindung von Proteinen können Amin-reaktive Gruppen umfassen, welche Isothiocyanate, Isocyanate, Acyl Azide, N-hydroxysuccinimid (NHS) Ester, Sulfonylchloride, Tosyl-Ester, Aldehyde oder Glyoxale, Epoxide und Oxirane, Carbonate, Imidoester, Carbodiimide, Anhydride, Fluorophenylester und Hydroxymethyl-Phosphinderivate umfassen. Funktionale Moleküle für die Bindung von Proteinen können auch Thiol-reaktive Gruppen umfassen, welche Haloacetyl und Alkylhalogenide, Maleimide, Aziridine, Acryloylderivate, Arylierende Reagenzien, Thiol-Disulfid-Austausch Reagenzien und Vinylsulfon-Derivate umfassen. Funktionale Moleküle für die Bindung von Proteinen können auch Hydroxylreaktive Gruppen umfassen, welche Epoxide und Oxirane, *N*,*N*'-Carbonyl Diimidazole, *N*,*N*'-Disuccinimidyl Carbonate, *N*-Hydroxysuccinimidyl Chloroformate, Alkylhalogenide, und Isocyanate umfassen. Funktionale Moleküle für die Bindung von Proteinen können auch Carboxyl-reaktive Gruppen umfassen, welche Carbodiimide, *N*,*N*'-Carbonyl Diimidazole, Diazoalkane und andere Diazoacetylverbindungen umfassen. Insbesondere kann die Beschichtung in den funktionalisierten Bereichen Aziridine und/oder NHS und/oder Sulfo-NHS umfassen.

Funktionale Moleküle für eine orthogonale, insbesondere bioorthogonale, Bindung können terminale oder gespannte Alkene, terminale oder gespannte Alkine, Carboxylgruppen (COOH), terminale primäre und sekundäre Amine, oder Thiole umfassen. Die funktionalen Moleküle können insbesondere Gruppen umfassen, welche in der Lage sind über Cycloadditionsreaktionen zu reagieren. Insbesondere können die funktionalen Moleküle terminale oder gespannte Alkine sein.

Die orthogonalen Bindungen können über die genannten Cycloadditionsreaktionen gebildet werden. Insbesondere kann ein funktionales Molekül, welches auf der Beschichtung gebunden ist, mittels einer solchen Cycloadditionsreaktion mit einem zu immobilisierenden Molekül oder Protein eine orthogonale, insbesondere bioorthogonale, Bindung eingehen. Solche Cycloadditionsreaktionen können Diels-Alder-Reaktionen, Kupfer- und Kupfer-freie Azid-Alkyne "Click-Reaktionen", radikalische Additionen wie Thiol-en-Reaktionen, oder Michael-Additionen sein.

Funktionale Moleküle für eine orthogonale, photochemisch vermittelte, Bindung können Gruppen umfassen, welche Arylazide und/oder Halogenierten Arylazide, Benzophenone und/oder Benzophenon-Derivate, Anthraquinone und/oder Anthraquinonderivate, Diazoverbindungen, Diaziirinderivate, oder Psoralenverbindungen umfassen.

Durch eine solche Funktionalisierung ist es möglich, Zelladhäsion auf der Beschichtung präzise zu kontrollieren, ohne Zell-Zell-Interaktionen oder die Interaktion von Zellen mit Biomolekülen zu stören.

Insbesondere können in für Proteinbindung funktionalisierten Bereichen Antikörper an die Beschichtung gebunden werden. Insbesondere können dies Einzeldomänenantikörper, die aus einer einzelnen, monomeren Domäne eines Antikörpers aufgebaut sind, sein. Solche Einzeldomänenantikörper sind auch unter dem Namen "Nanobodies" bekannt. Dies ist vorteilhaft, da solche Antikörper besonders stabil gegen Denaturierung insbesondere bei Trocknung, sind.

Die funktionalen Moleküle können auch thermoresponsive Eigenschaften aufweisen. Insbesondere kann die Adhäsion von Zellen an die funktionalen Moleküle bei einer Änderung der Umgebungstemperatur rückgängig gemacht werden. Dies ermöglicht beispielsweise schonende Ablösevorgänge für sensible Zelltypen.

In der Probenkammer kann weiterhin ein natürliches oder synthetisches Hydrogel angeordnet sein, in welches Zellen eingebettet werden können. Insbesondere ist das Hydrogel auf dem Boden des Probenreservoirs angeordnet. Das Hydrogel kann dabei beschichtete sowie unbeschichtete Bereiche des Bodens bedecken. Hier ist die erfindungsgemäße Beschichtung vorteilhaft, da sie Migration von Zellen entlang des Bodens unterdrückt, und so dreidimensionale Migration von Zellen innerhalb des Hydrogels unterstützt.

Das Probenreservoir kann eine Öffnung und/oder einen Hohlraum umfassen, wobei die Öffnung und/oder der Hohlraum durch eine durchgehende Öffnung und/oder eine Vertiefung im ersten Bauteil ausgebildet sind.

Das Probenreservoir ist insbesondere ein Teilbereich der Probenkammer, der zum Aufnehmen einer Flüssigkeit geeignet ist. Dabei kann es sich um ein nach oben offenes Reservoir oder um einen Hohlraum handeln. Insbesondere kann ein solcher Hohlraum über eine Öffnung verfügen, durch welche die Flüssigkeit in das Reservoir eingebracht werden kann.

Die Probenkammer selbst kann in verschiedenen Geometrien und Formen vorliegen. In einer Ausführung umfasst die Probenkammer ein zweites Bauteil in Form einer planaren Bodenplatte, die mit einem ersten Bauteil verbunden ist. Das erste Bauteil kann eine Vertiefung in Form eines Hohlraums aufweisen. Dabei kann der Hohlraum zylinder- oder quaderförmig sein. Weiterhin kann das erste Bauteil eine durchgehende Öffnung aufweisen. Die Öffnung kann ovale oder polygonale Form haben. Die Probenkammer kann dann die Form eines nach oben offenen Reservoirs mit einer ovalen oder polygonalen Grundfläche haben. Die Form der Vertiefung oder der durchgehenden Öffnung ist aber nicht auf diese geometrischen Formen begrenzt.

Das erste Bauteil kann auch die Form einer Deckplatte aufweisen. Die Deckplatte kann eine Vertiefung aufweisen, wobei durch die Vertiefung in der Deckplatte in Verbindung mit der Bodenplatte ein Probenreservoir gebildet wird. Die Form des Probenreservoirs kann durch die Geometrie der Vertiefung in der Deckplatte bestimmt werden. So kann, zum Beispiel, ein Probenreservoir in Form eines kanalförmigen Hohlraums durch eine Nut in der Deckplatte gebildet werden. In das Probenreservoir kann eine zu untersuchende Probe und/oder eine Flüssigkeit eingebracht werden. Die Probenkammer kann für chemische und/oder biologische Untersuchungen an chemischen und/oder biologischen Proben verwendet werden. Als Probe sind, zum Beispiel, lebende Zellen, Proteine, DNA, Viren etc. möglich.

Das zweite Bauteil kann ein flächiges Element sein. Das flächige Element kann eine im Wesentlichen konstante Dicke von 50 bis 250 µm, vorzugsweise 100 bis 200 µm, aufweisen. Insbesondere kann es sich bei dem zweiten Bauteil um ein Plättchen, eine Folie oder eine Membran handeln. Eine solche Gestaltung des zweiten Bauteils ermöglicht in vorteilhafter Weise eine Anwendung der inversen Mikroskopie.

Die Höhe des Probenreservoirs kann entlang des Kanals konstant sein. Sie kann sich entlang des Kanals aber auch monoton ändern. Dies ermöglicht beispielsweise Strömungsmessungen, bei denen entlang des Kanals ein Gradient in der Scherspannung auftritt, welche auf adhärierende Zellen wirkt. Insbesondere in Verbindung mit einer wie oben beschriebenen Struktur der Beschichtung, die einen Zellkonzentrationsgradienten ermöglicht, kann sichergestellt werden, dass das lokale Verhältnis der Wachstumsfläche zum Volumen des Probenreservoirs entlang der Kanalstruktur im Wesentlichen konstant bleibt. Dabei bezieht sich der Begriff "lokal" jeweils auf einen Bereich des Probenreservoirs, der sich entlang des Kanals in einer Länge erstreckt, die klein im Vergleich zu der Gesamtlänge des Kanals ist.

Die Probenkammer kann mehrere Probenreservoire umfassen. Insbesondere können die mehreren Probenreservoire fluidisch miteinander verbunden oder voneinander getrennt sein.

Das zweite Bauteil kann weiterhin eine oder mehrere Erhebungen und/oder Vertiefungen aufweisen. Insbesondere können die Erhebungen und/oder Vertiefungen auf dem Boden des Probenreservoirs angeordnet sein. Die Erhebungen und/oder Vertiefungen können mit der Oligomer- und/oder Polymerschicht bedeckt sein. Auf diese Weise können beispielsweise zellabweisende "Strömungsfallen" hergestellt werden. Solche Elemente können beispielsweise in Strömungsexperimenten den Durchfluss von Zellen durch das Probenreservoir behindern. Durch die Beschichtung kann sichergestellt werden, dass in der bestimmungsgemäßen Verwendung keine Zelladhäsion an diese Strömungsfallen stattfinden kann.

Das erste und/oder das zweite Bauteil können jeweils als ein Spritzgussteil ausgebildet sein oder aus mehreren Kunststoffteilen zusammengefügt sein. Sie können auch in einem Extrusionsverfahren hergestellt werden. Die mehreren Kunststoffteile können insbesondere in Form und/oder Material unterschiedlich sein.

Mögliche Kunststoffe sind beispielweise COC (Cyclo-Olefin-Copolymer), COP (Cyclo-Olefin-Polymer), PE (Polyethylen), PS (Polystyrol), PC (Polycarbonat) oder PMMA (Polymethylmethacrylat). Insbesondere kann der Kunststoff COC und/oder COP sein. Der Kunststoff kann ein Elastomer umfassen. Das Elastomer kann ein Silikon, insbesondere Polydimethylsiloxan, PDMS, umfassen. Das zweite Bauteil kann auch ein Glas umfassen. Das zweite Bauteil kann auch einen super-hydrophobisierten Kunststoff umfassen, beispielsweise ein fluoriertes Polymer. Ein fluoriertes Polymer kann beispielsweise Polypentafluorstyrol oder Blockpolymere davon umfassen.

Das erste und/oder zweite Bauteil können eine vorherbestimmte Eigenfluoreszenz, die insbesondere kleiner oder gleich der Eigenfluoreszenz von COC oder COP oder eines herkömmlichen Deckglases ist, und/oder einen vorherbestimmten Brechungsindex, aufweisen.

Insbesondere kann die Eigenfluoreszenz kleiner oder gleich der Eigenfluoreszenz eines herkömmlichen Deckglases, beispielsweise reinweißes Glas der hydrolytischen Klasse 1 wie Menzel-Deckglas, insbesondere mit der Stärke Nr. 1,5, sein. Der vorherbestimmte Brechungsindex kann insbesondere > 1,2 und/oder < 1,7, sein. Mit einem derart optisch hochwertigen Material lassen sich in vorteilhafter Weise Mikroskopieuntersuchungen durchführen. Beispielsweise kann die Doppelbrechung so gering sein, dass DIC (Differential Interference Contrast) möglich ist. Eine geringe Eigenfluoreszenz erlaubt die Durchführung von Fluoreszenzmessungen.

Das erste und/oder zweite Bauteil können in einem Frequenzbereich der elektromagnetischen Strahlung entspiegelt sein. Dadurch kann die Transmission durch das erste und/oder zweite Bauteil erhöht werden, sodass Einzelmolekülmessungen mit Hilfe von Fluoreszenz möglich sind. Für die Entspiegelung kann das erste und/oder zweite Bauteil eine weitere Beschichtung aufweisen. Beispielsweise kann eine ITO-Schicht auf der Bodenplatte und/oder Deckplatte angeordnet sein. Die Dicke der ITO-Schicht kann so gewählt werden, dass das erste und/oder zweite Bauteil in einem für Mikroskopie verwendeten Frequenzbereich der elektromagnetischen Strahlung entspiegelt sind. Beispielsweise kann die Dicke der ITO-Schicht λ/2 bis 4λ betragen, um eine Entspiegelung zu erreichen, wobei λ die verwendete Wellenlänge angibt. Insbesondere kann die Wellenlänge λ im Bereich von 300 nm bis 700 nm liegen. In diesem Fall kann die Dicke der Beschichtung zwischen 200 nm und 1 µm liegen. Insbesondere kann die ITO-Schicht auch zur Temperierung der Probenkammer verwendet werden.

Die Bodenfläche des Probenreservoirs kann die Abmessungen eines herkömmlichen Mikroskopieobjektträgers, insbesondere eine Breite von 25,5 mm und eine Länge von 75,5 mm, oder die Abmessungen einer Multititerplatte aufweisen.

Das Probenreservoir kann ein Volumen von zwischen 10 µl und 200 µl, vorzugsweise zwischen 20 µl und 150 µl, aufweisen. Das Probenreservoir kann aber auch ein größeres Volumen aufweisen. Insbesondere kann es ein Volumen von zwischen 1 ml und 5 ml aufweisen. Die Höhe des Reservoirs kann zwischen 5 µm und 1 mm, vorzugsweise zwischen 0,1 mm und 0,5 mm, liegen. Die Höhe des Reservoirs kann auch zwischen 5 mm und 15 mm liegen. Der, insbesondere maximale, Durchmesser des Reservoirs kann zwischen 10 µm und 50 mm, vorzugsweise zwischen 1 mm und 35 mm, betragen.

Die Probenkammer kann weiterhin einen elektrischen Sensor umfassen, der für Impedanzmessungen geeignet ist. Bei solchen Messungen wird das Zellwachstum auf der Sensoroberfläche mittels der daraus folgenden Impedanzänderung des Sensors untersucht. Insbesondere kann der Sensor eine Elektrode umfassen, die auf dem Boden der Probenammer angeordnet ist. Die Beschichtung kann dann insbesondere die Elektrode vollumfänglich umgeben, wobei die Elektrodenoberfläche unbeschichtet bleibt. Mit anderen Worten bildet die Elektrodenoberfläche eine Zelladhäsionsfläche. Dies ist vorteilhaft, da so sichergestellt werden kann, dass das Zellwachstum auf die Elektrodenoberfläche beschränkt wird.

Erfindungsgemäße Probenkammern sind insbesondere geeignet für funktionelle Assays wie Metastasierung, Adhäsions- und Interaktionsstudien, Migration, kollektive Migrationschemotaxis und kollektive Chemotaxis, Perfusionsexperimente oder Automatisierungen auf mikroskopischer Ebene.

Die Erfindung stellt weiterhin ein Verfahren zur Herstellung einer Probenkammer, insbesondere einer der im Vorigen beschriebenen Probenkammern, zur Verfügung, welches folgende Schritte umfasst:
Bereitstellen eines ersten Bauteils;
Bereitstellen eines zweiten Bauteils;
Beschichten der planaren Fläche mit einer Oligomer- und/oder Polymerschicht, an der keine Adhäsion von Zellen und/oder Biomolekülen stattfindet; und
Verbinden des ersten Bauteils mit dem zweiten Bauteil, so dass ein Probenreservoir entsteht, welches von dem ersten und dem zweiten Bauteil begrenzt wird, wobei die Seitenwände und/oder die Decke des Probenreservoirs durch das erste Bauteil und der Boden des Probenreservoirs durch das zweite Bauteil ausgebildet sind.

Hierbei kann der Beschichtungsschritt vor dem Verbindungsschritt oder nach dem Verbindungsschritt ausgeführt werden.

Die Beschichtung kann in Form einer Molekül-, Oligomer- oder Polymerlösung aufgetragen werden. Lösemittel können insbesondere Wasser und wässrige Pufferlösungen, Methanol, Ethanol oder Propanol, Dioxan, Dimethyl Sulfoxid (DMSO), Dimethylformamid (DMF), Dichlormethan (DCM) oder Chloroform sein. Auch Lösemittelgemische sind möglich. Insbesondere kann das Lösemittel Wasser und/oder eine wässrige Pufferlösung sein.

Die Molekül-, Oligomer- oder Polymerlösung kann mittels eines Tauch-, Dosier-, oder Sprühverfahrens oder mittels Drehbeschichtung aufgetragen werden. Insbesondere kann die Beschichtung mittels Drehbeschichtung aufgetragen werden.

Die Beschichtung mittels eines Tauchverfahrens kann einen oder mehrere Tauchschritte umfassen. Dabei kann während eines Tauchschrittes das zweite Bauteil in die Molekül-, Oligomer- oder Polymerlösung eingetaucht, dort inkubiert, und anschließend wieder herausgezogen werden. Nach jedem Tauchschritt kann ein Vernetzungsschritt erfolgen. Es kann aber auch nur ein Vernetzungsschritt am Ende des Beschichtungsverfahrens erfolgen.

Bei der Beschichtung mittels eines Dosierverfahrens kann die Menge der aufzubringenden Lösung so gewählt werden, dass sie nur einen vorherbestimmten Oberflächenbereich benetzt. Dort kann die Lösung inkubiert und anschließend vernetzt werden. Dafür kann die Lösung beispielsweise mittels eines industriellen Strahldruckers auf das zweite Bauteil aufgetragen werden. So können beschichtete Bereiche hergestellt werden, deren Größe und Abstand durch das Tropfenvolumen und den Düsenabstand des Druckers bestimmt sind. So können bei einem Tropfenvolumen von 2 nL und einem Düsenabstand, der kleiner oder gleich 254 µm ist, eine Auflösung, das heißt ein Abstand zwischen zwei beschichteten Bereichen, von kleiner als 50 µm erreicht werden.

Bei der Beschichtung mittels eines Sprühverfahrens ist es mögliche, eine oder mehrere Schichten auf das zweite Bauteil aufzutragen und sie anschließend zu vernetzen. Dabei kann die Vernetzung jeweils nach dem Auftragen einer Schicht oder nach dem Auftragen aller Schichten erfolgen.

Bei der Beschichtung mittels eines Drehbeschichtungsverfahrens kann die Lösung mit einer Schichtdicke von weniger als 1000 µm aufgetragen werden. Solche Schichtdicken können mittels mehrerer Drehbeschichtungsschritte erzeugt werden. Dabei können die Schichten jeweils nach einem Drehbeschichtungsschritt oder nach Beendigung aller Drehbeschichtungsschritte vernetzt werden. Es können auch Schichtdicken von weniger als 1 µm, insbesondere weniger als 500 nm aufgetragen werden. Insbesondere kann die Schichtdicke kleiner oder gleich 200 nm sein. Insbesondere ist dies bei der Verwendung von viskosen Molekül-, Oligomer- oder Polymerlösungen möglich.

Das zweite Bauteil kann aktiviert sein, um die Bindung der Beschichtung an die Oberfläche des zweiten Bauteils zu verbessern. Unter einer Aktivierung ist hier insbesondere die Änderung der Oberflächenladung des zweiten Bauteils zu verstehen. Eine solche Aktivierung kann eine lonenplasmabehandlung umfassen. Ein geeignetes lonenplasma kann beispielsweise mittels Niederdruck-Mikrowellenverfahren oder Coronaverfahren generiert werden. Geeignete ionisierende Gase können Umgebungsluft, reiner Sauerstoff oder Stickstoff sein. Eine Aktivierung kann auch das Begasen mit reaktivem Ozon oder eine Behandlung mit Ozon bildender UV-Strahlung umfassen. Die Aktivierung kann auch nasschemische Behandlungen, wie beispielsweise enzymatische Oxidationen, beispielsweise mittels Laccase, oder Oxidation mittels oxidierenden Mineralsäuren, umfassen. Die Mineralsäuren können beispielsweise Peroxoschwefelsäure, Salzsäure oder Salpetersäure sein.

Die Aktivierung kann auch eine photochemische Ionisierung umfassen. Die photochemische Ionisierung kann insbesondere unter Verwendung von UV-Strahlung mit einer Wellenlänge, die kleiner als 254 nm, insbesondere kleiner als 200 nm, ist, erfolgen.

Aktivierte Oberflächen können insbesondere unter Vermittlung eines kovalenten Haftvermittlers mit der Beschichtung verbunden werden. Kovalente Haftvermittler können beispielsweise homo- oder heterofunktionale, bivalente Quervernetzer sein, welche die Form Rₓ-Z-Rₓ aufweisen können, wobei Rₓ organofunktionelle Gruppen der Klassen der Amine, Alkene und gespannten Alkene wie zum Beispiel Norbornene, Acrylate, Aldehyde, Ketale, Epoxide, Thiole, Isothiocyanate, Isocyanate oder Silane sein können. Z bezeichnet eine Linkerstruktur, die beispielsweise Alkanketten der Form (CH₂)ₙ oder Ethylenglycol-Ketten der Form (OCH₂CH₂)ₙ umfassen kann, wobei 1≤n≤1000 sein kann.

Heterofunktionale Quervernetzer können die Form Rₓ-Z-R_{y} aufweisen, wobei R_{y} organofunktionelle Gruppen der Klassen der Amine, Alkene und gespannten Alkene wie zum Beispiel Norbornene, Acrylate, Aldehyde, Ketale, Epoxide, Thiole, Isothiocyanate oder Isocyanate und Silane sein können.

Insbesondere können heterofunktionale Quervernetzer Silane sein. Hierbei sind Silane der allgemeinen Form Rₓ-(CH₂)ₙ-Si-X₃ geeignet, wobei Rₓ eine organofunktionelle Gruppe, (CH₂)ₙ ein Alkan-Linker, und X₃ hydrolisierbare Gruppen sind. Anstatt X₃ können Silane auch das Substitutionsmuster X₂Y oder XY₂ tragen, wobei Y keine hydrolisierbare Gruppe, zum Beispiel eine Methyl- oder Ethyl-Gruppe, sein kann. Hydrolisierbare Gruppen können Alkoxygruppen wie Methoxy oder Ethoxy, oder Halogensubstituenten wie Chlor, Brom oder lod sein. Organofunktionelle Gruppen Rₓ können insbesondere Amine, Alkene und gespannte Alkene, zum Beispiel Norbornene, Acrylate, Aldehyde, Ketale, Epoxide, Thiole, Isothiocyanate, Isocyanate oder Silane sein. Da die Länge des Alkan-Linkers die Hydrophilität, beziehungsweise Hydrophobizität, des Quervernetzers beeinflusst, sind Linker der Art (CH₂)ₙ mit n≤10 bevorzugt.

Genannte homo- und heterofunktionelle Quervernetzer können insbesondere photokatalysiert binden. Dabei können Typ-I-Photoinitiatoren, beispielsweise Benzoin-Derivate, Benzyketale, α-Hydroxyketone, α-Hydroxyalkyl-Phenone, α-Amino-Acetophenone, α-Aminoketone, Acylphosphinoxide, Metallocene und/oder Derivate der genannten, oder Typ-II-Photoinitiatoren wie Phenylglyoxylate, Benzopheneone oder Thioxanthone und/oder Derivate der genannten, verwendet werden. Insbesondere können zur photokatalytischen Bindung der Quervernetzer Benzophenone als Typ-II-Photoinitiatoren verwendet werden.

Die Aktivierung des zweiten Bauteils kann insbesondere selektiv erfolgen. So kann erreicht werden, dass die Beschichtung nur in bestimmten Bereichen an die Oberfläche des zweiten Bauteils binden kann. Die selektive Aktivierung kann unter Verwendung von Masken während eines lonenplasma oder photochemischen Verfahrens erfolgen. So kann ein durch die Struktur der Masken bestimmtes Muster von beschichteten Bereichen auf dem zweiten Bauteil entstehen.

Die Lösung kann auch homogen aufgetragen und lokal vernetzt werden. Dies kann durch das Auftragen eines chemischen Quervernetzers mittels eines Strahldruckers erfolgen. Es kann auch photochemisch mittels geeigneter photolabiler Photoinitiatoren, wie Benzoin-Derivaten, Benzilketalen, α-Hydroxyketonen, α-Hydroxyalkyl-Phenonen, α-Amino-Acetophenoen, α-Aminoketonen, Acylphosphinoxiden, Metallocenen und/oder Derivaten der genannten erfolgen. Weitere mögliche Quervernetzer sind Phenylglyoxylate, Benzopheneone oder Thioxanthone und/oder Derivate der genannten.

Für eine Photostrukturierung kann die Belichtung der Lösung mittels geeigneter Masken, sowie alternativ oder zusätzlich mittels steuerbarer Lasern oder digital manipulierbaren Spatial-Light-Modulator (SLM) Filtern gesteuert werden. Dabei kann die Auflösung der Strukturierung mit geeigneten Objektivanordnungen beeinflusst werden.

Ein nass- oder photochemisches, lokales Vernetzen der Beschichtung kann das Fertigen von dreidimensionalen Beschichtungsstrukturen ermöglichen. Hierbei können Schichtdicken in der Stärke der dreidimensionalen Struktur aufgetragen und wie oben beschrieben lokal vernetzt werden. Ein anschließender Waschschritt kann unvernetzte Moleküle, Oligomere oder Polymere entfernen, so dass lediglich die vernetzte dreidimensionale Struktur zurückbleibt.

Das Verbinden des ersten Bauteils mit dem zweiten Bauteil kann das Verkleben des ersten Bauteils mit dem zweiten Bauteil mittels eines Haftvermittlers, oder das chemische oder thermische Verschmelzen des ersten Bauteils mit dem zweiten Bauteil umfassen. Ein Haftvermittler kann beispielsweise ein Harz aus der Klasse der Epoxide, Acrylsäuren oder Isocyanate sein. Es kann auch zur Klasse der PE, EMMA oder EVA basierte Polymer-Haftvermittler gehören. Es kann sich auch um eine die spezielle Beschichtung kovalent bindendes vernetzendes Molekül handeln. Hierbei kann es sich um bivalente Moleküle der Klasse der Aldehyde, Ketale, Epoxide, Isothiocyanate oder Isocyanate handeln.

Das Beschichten des zweiten Bauteils kann weiterhin eine Strukturierung der Beschichtung mittels eines formgebenden Stempels umfassen. Dabei kann der Stempel beispielsweise in die bereits vernetzte Oligomer- und/oder Polymerschicht eingepresst werden. Es ist aber auch möglich, dass der Stempel zur Formgebung während der Vernetzung auf dem zweiten Bauteil platziert wird. Der Stempel kann insbesondere Glas und/oder PDMS umfassen. Dies ermöglicht eine einfache Herstellung sowie Wiederverwendung des Stempels.

Das Verbinden des ersten Bauteils mit dem zweiten Bauteil kann das Verkleben des ersten Bauteils mit dem zweiten Bauteil mittels eines Haftvermittlers, oder das chemische oder thermische Verschmelzen des ersten Bauteils mit dem zweiten Bauteil umfassen. Ein Haftvermittler kann beispielsweise ein Harz aus der Klasse der Epoxide, Acrylsäuren oder Isocyanate sein. Es kann auch zur Klasse der PE, EMMA oder EVA basierte Polymer-Haftvermittler gehören. Es kann sich auch um eine die spezielle Beschichtung kovalent bindendes vernetzendes Molekül handeln. Hierbei kann es sich um bivalente Moleküle der Klasse der Aldehyde, Ketale, Epoxide, Isothiocyanate oder Isocyanate handeln.

Für das chemische Verschmelzen der beiden Bauteile können Kontaktflächen auf beiden Bauteilen mit einem Lösemittel angelöst werden, und über einen Anpressdruck miteinander verbunden werden. Beim thermischen Verschmelzen können die Kontaktflächen bei einer ausreichenden Oberflächentemperatur angeschmolzen werden und anschließend über einen Anpressdruck miteinander verbunden werden.

Das Verbinden des ersten Bauteils und des zweiten Bauteils kann auch über ein beide Bauteile verbindendes Polymer stattfinden. Das verbindende Polymer kann insbesondere ein Elastomer, insbesondere ein Silikon, sein. Insbesondere kann das Polymer PDMS sein.

Das Verbinden des ersten Bauteils und des zweiten Bauteils kann mittels eines haftvermittelnden dritten Bauteils stattfinden. Das dritte Bauteil kann insbesondere ein haftvermittelndes Polymer umfassen.

Die Bereitstellung des zweiten Bauteils kann die Extrusion des zweiten Bauteils umfassen und das Beschichten des zweiten Bauteils kann die Co-Extrusion einer Polymerschicht zusammen mit dem zweiten Bauteil umfassen. Dabei können das zweite Bauteil und die Polymerschicht direkt oder mittels haftvermittelnder Schichten miteinander verbunden werden. Dies erlaubt ein effizientes Herstellen des beschichteten zweiten Bauteils in einem Arbeitsschritt. Geeignete Polymere können auch bei der Herstellung des zweiten Bauteils co-extrudiert werden. Auch eine Verklebung des zweiten Bauteils mit dem Beschichtungspolymer ist möglich. Geeignete Haftvermittler hierfür sind zum Beispiel Epoxid-, Acryl- oder Isocyanat-basierte Harze. PE, EMMA oder EVA basierte Polymer-Haftvermittler.

Das Verfahren zur Herstellung der Probenkammer kann demnach eines oder mehrere der oben genannten Merkmale aufweisen.

Weitere Merkmale der Erfindung werden nachfolgend anhand der beispielhaften Figuren erläutert. Dabei zeigt:
- Figur 1: eine Ausführungsform einer erfindungsgemäßen Probenkammer in Explosionsdarstellung;
- Figur 2: schematisch Anwendungsbeispiele erfindungsgemäß beschichteter Probenkammern;
- Figur 3: eine Ausführungsform einer erfindungsgemäßen Probenkammer in Explosionsdarstellung;
- Figur 4: eine Ausführungsform einer erfindungsgemäßen Probenkammer in Explosionsdarstellung;
- Figur 5: beispielhafte Formen erfindungsgemäßer Vertiefungen;
- Figur 6: beispielhafte Muster, die von Adhäsionsstrukturen gebildet werden;
- Figur 7: das erfindungsgemäße Aufbringen einer Beschichtung mittels eines Stempels (Figur 7a bis 7c) sowie mögliche Strukturierungen (Figur 7d bis Figur 7i);
- Figur 8: Ausführungsformen einer erfindungsgemäßen Probenkammer;
- Figur 9: Ausführungsformen einer erfindungsgemäßen Probenkammer;
- Figur 10: eine Ausführungsform einer erfindungsgemäßen Probenkammer;
- Figur 11: beispielhafte Muster, die von Adhäsionsstrukturen gebildet werden;
- Figur 12: Ausführungsform einer erfindungsgemäßen Probenkammer;
- Figur 13: Anwendungsbeispiele einer erfindungsgemäßen Probenkammer;
- Figur 14: beispielhafte Muster, die von Adhäsionsstrukturen gebildet werden;
- Figur 15: Ausführungsformen einer erfindungsgemäßen Probenkammer; und
- Figur 16: Anwendungsbeispiele erfindungsgemäßer Probenkammern.

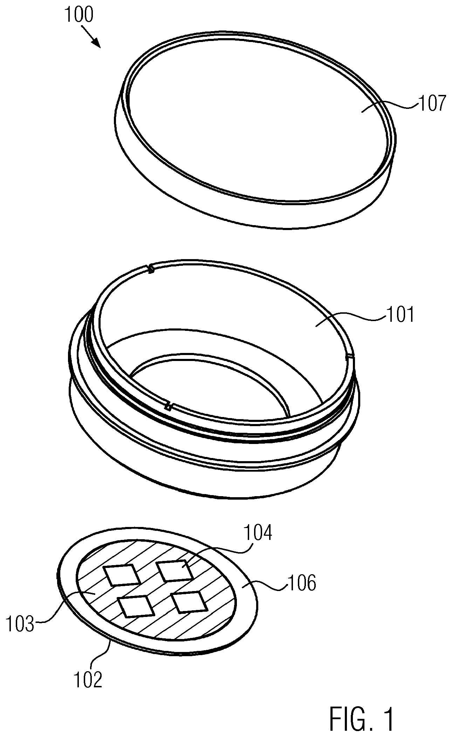

Figur 1 zeigt schematisch den Aufbau einer erfindungsgemäßen Probenkammer 100 in Explosionsdarstellung. Hierbei ist ein erstes Bauteil 101 gezeigt, welches die Form eines kreisförmigen Reservoirs mit einer Durchgangsöffnung im Boden aufweist. In der gezeigten Ausführungsform umfasst die Durchgangsöffnung nur einen Teil der Bodenfläche des ersten Bauteils. Sie kann aber auch die gesamte Bodenfläche des ersten Bauteils umfassen. Weiterhin ist ein zweites Bauteil 102 zu sehen, auf dem Zell- und Biomolekülabweisende Beschichtung 103 aufgebracht ist. Die Beschichtung besteht hier aus einer PVA-Schicht, die mittels Drehbeschichtung auf das zweite Bauteil aufgetragen wurde. Anschließend wurde sie lokal photochemisch vernetzt. Die Dicke der gezeigten Beschichtung kann weniger als 1 µm betragen und ist über den beschichteten Bereich im Wesentlichen konstant. Die Beschichtung 103 umschließt vier Adhäsionsbereiche 104, welche eine rechteckige Form aufweisen.

Beide Bauteile können über einen Verbindungsbereich 106 miteinander verbunden werden. Die Verbindung kann durch Verkleben mittels eines Haftvermittlers oder können durch chemisches oder thermisches Verschmelzen hergestellt werden. Die Bauteile können auch über ein haftvermittelndes drittes Bauteil verbunden werden (nicht gezeigt).

Im verbundenen Zustand begrenzen das erste Bauteil 101 und das zweite Bauteil 102 ein Probenreservoir 105, welches hier die Form eines kreisförmigen, nach oben offenen Reservoirs bildet. Durch die Unterteilung der Bodenfläche in die Adhäsionsbereiche 104 bildet ist das Probenreservoir 105 ein Multiwellreservoir. Um eine Evaporation oder Kontaminationen des Nährmediums zu verhindern, kann das Probenreservoir 105 über einen Deckel 107 verschlossen werden.

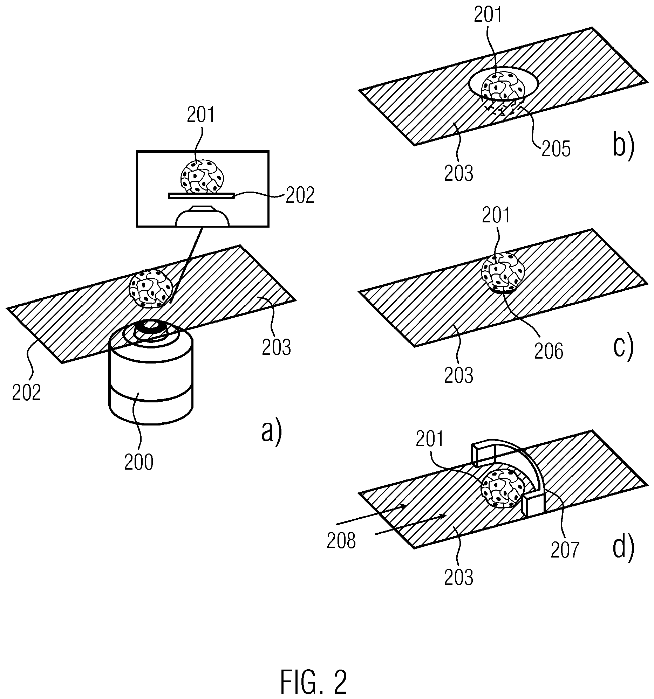

Figur 2a zeigt schematisch die Beobachtung eines Zellaggregats 201 mittels eines Mikroskops 200 in inverser Mikroskopie durch den Boden 202 einer Probenkammer (nicht gezeigt). Der Boden 202 ist hier insbesondere mit einer Beschichtung 203 aus einer Oligomer- und/oder Polymerschicht versehen, welche Zell- und/oder Biomolekül-abweisend ist. Die Beschichtung kann der Beschichtung 103 der in Figur 1 gezeigten Ausführungsform entsprechen oder eine andere der weiter oben aufgeführten Beschichtungstypen sein. Um Zellen und Zellaggregate in hoher optischer Qualität mikroskopieren zu können, muss die Beobachtungsfläche, wie gezeigt, plan und zudem von hoher optischer Qualität sein.

Figur 2b bis 2d zeigen schematisch verschiedene Möglichkeiten, wie ein Zellaggregat 201 im Beobachtungsbereich fixiert werden kann. In Figur 2b geschieht dies mittels einer Vertiefung 205 in der Beobachtungsfläche. Dabei kann die Vertiefung insbesondere in der Beschichtung ausgebildet sein. Figur 2c zeigt die Fixierung mittels eines unbeschichteten, planen Zelladhäsionsbereichs 206. In Figur 2d ist die Fixierung mittels einer beschichteten Strömungsfalle 207 dargestellt. Dabei ist auch ein Fluss 208 angedeutet.

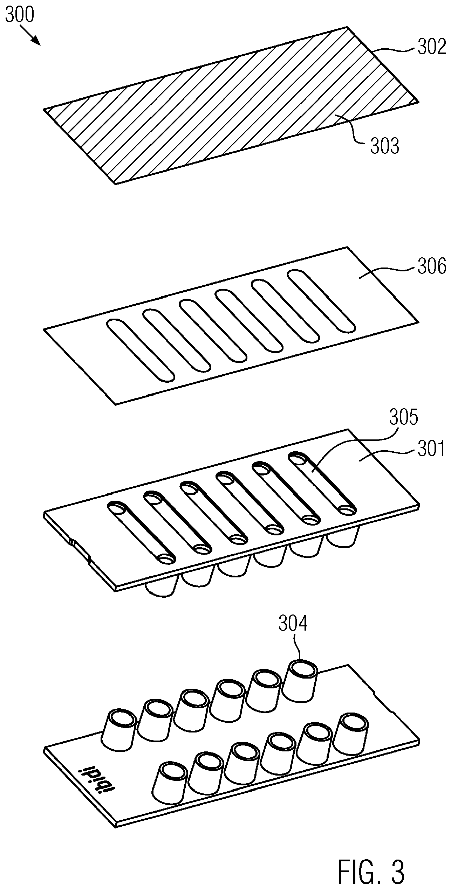

Figur 3 zeigt schematisch eine weitere Ausführungsform einer erfindungsgemäßen Probenkammer 300 in Explosionsansicht. Insbesondere umfasst die Probenkammer 300 mehrere Probenreservoire 305 in Kanalform. Hierbei hat das erste Bauteil 301 die Form bodenloser Kanalstrukturen mit hohlzylinderförmigen Aufsätzen. Das zweite Bauteil 302 hat die Form einer rechteckigen Platte und kann mit einer Oligomer- und/oder Polymerschicht 303 beschichtet sein. Die Beschichtung kann der Beschichtung 103 der in Figur 1 gezeigten Ausführungsform entsprechen oder eine andere der weiter oben aufgeführten Beschichtungstypen sein. Beide Bauteile können über eine Verbindungsschicht 306 miteinander verbunden werden. Die Verbindung kann durch Verkleben mittels eines Haftvermittlers oder können durch chemisches oder thermisches Verschmelzen hergestellt werden. Die Bauteile können auch über ein haftvermittelndes drittes Bauteil verbunden werden (nicht gezeigt). Der Zugang zu den einzelnen Probenreservoiren 305 kann in dieser Ausführungsform beispielsweise mittels Luer-Anschlüssen 304 ermöglicht werden.

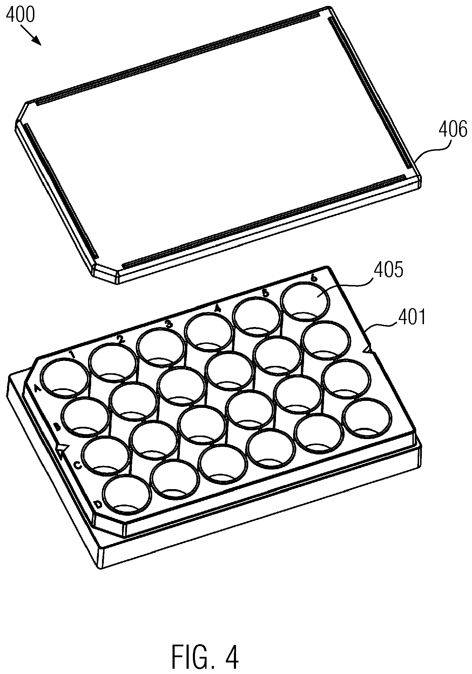

Figur 4 zeigt schematisch eine weitere Ausführungsform einer erfindungsgemäßen Probenkammer 400. Insbesondere umfasst die Probenkammer 400 mehrere Probenreservoire 405. Hierbei hat das erste Bauteil 401 die Form bodenloser Reservoire. Das zweite Bauteil hat die Form einer rechteckigen Platte besitzen und mit einer Oligomer- und/oder Polymerschicht beschichtet sein (nicht gezeigt). Die Beschichtung kann der Beschichtung 103 der in Figur 1 gezeigten Ausführungsform entsprechen oder eine andere der weiter oben aufgeführten Beschichtungstypen sein. Beide Bauteile können über eine Verbindungsschicht miteinander verbunden werden. Die Verbindung kann durch Verkleben mittels eines Haftvermittlers oder können durch chemisches oder thermisches Verschmelzen hergestellt werden. Die Bauteile können auch über ein haftvermittelndes drittes Bauteil verbunden werden (nicht gezeigt). Um eine Evaporation oder Kontaminationen des Nährmediums zu verhindern, können die Probenreservoire über eine Abdeckkonstruktion 406 verschlossen werden.

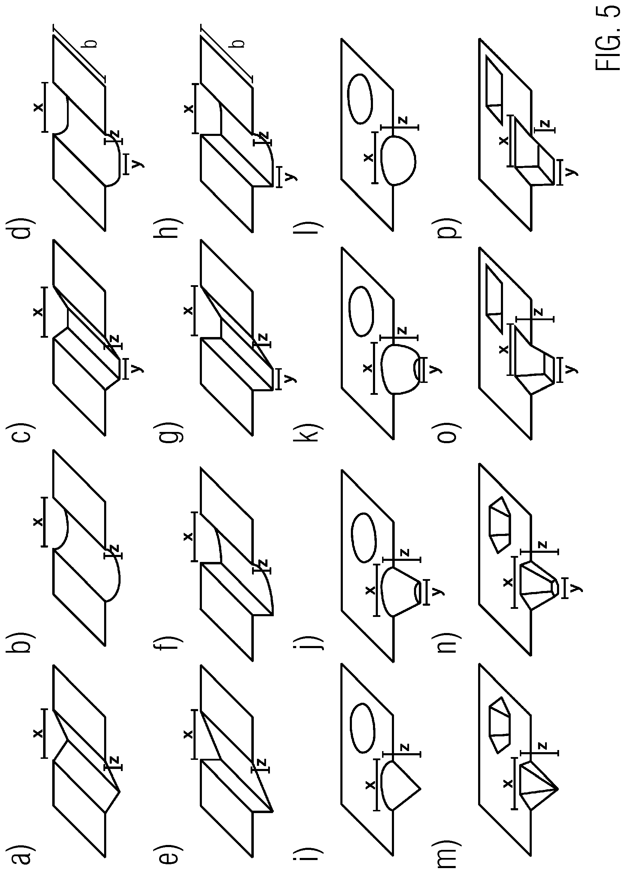

Figur 5 zeigt schematisch mögliche Formen für Vertiefungen insbesondere der Beschichtung, welche für die Fixierung von Zellen oder Zellaggregaten vorteilhaft sind. Die Beschichtung kann der Beschichtung 103 der in Figur 1 gezeigten Ausführungsform entsprechen oder eine andere der weiter oben aufgeführten Beschichtungstypen sein. Die Vertiefungen können die Form von Kanälen wie in Figur 5a - Figur 5h gezeigt oder Mulden, wie in Figur 5i - Figur 5p gezeigt, aufweisen. Die Vertiefungen können eine Tiefe z von 50 - 2000 µm aufweisen. Die Kanäle können eine Breite b von 50 µm bis maximal der Breite des Probenreservoirs aufweisen. Die gezeigten Kanäle und Mulden können einen Durchmesser beziehungsweise eine Kantenlänge x von 50 µm bis 2000 µm aufweisen. Sie können spitz oder rund zulaufen. Sie können auch spitz zulaufen, jedoch eine abgeflachte Spitze aufweisen, wie in Figuren 5c, 5d, 5g, 5h, 5j, 5k, 5n, 5o und 5p gezeigt. Die Abflachung kann eine Breite y von 10 µm bis 300 µm aufweisen. Die Mikrovertiefungen können, wie in Figur 5a - Figur 5d sowie Figur 5i - Figur 5o gezeigt, symmetrische Form aufweisen. Sie können aber auch, wie in Figur 5e bis 5h, sowie Figur 5p gezeigt, asymmetrische Formen besitzen. Letztgenannte Formen eignen sich beispielsweise für die Verwendung der Vertiefungen als negative Strömungsfallen, bei denen Zellen aufgrund der Schwerkraft und der Vertiefung bei Strömungsexperimenten in Strömungsrichtung zurückgehalten werden.

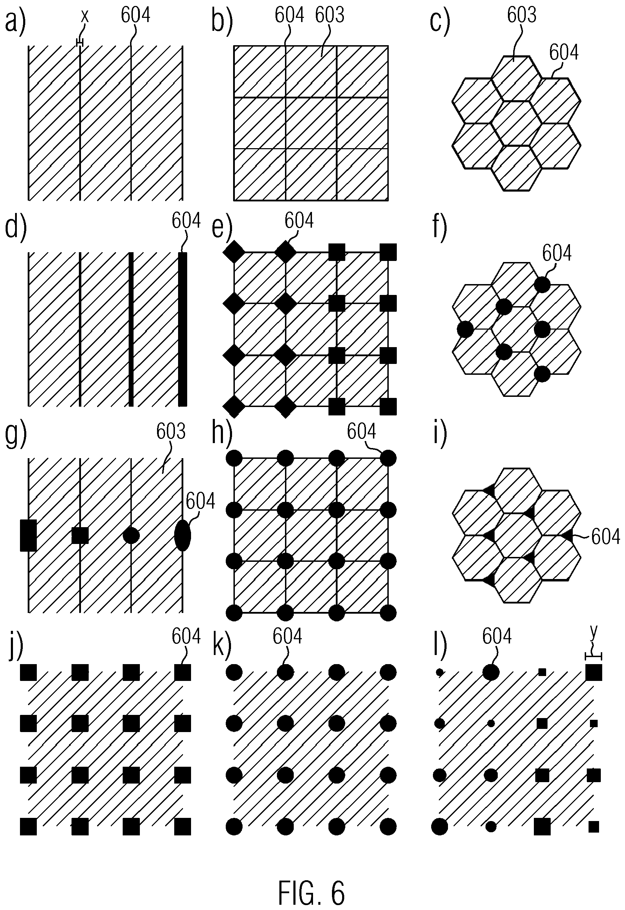

Figur 6 zeigt schematisch mögliche Muster, welche von Zelladhäsionsbereichen erfindungsgemäß gebildet werden. Schraffierte Bereiche 603 stellen hierbei mit einer Oligomer- und/oder Polymerschicht beschichtete Bereiche dar, während unbeschichtete Bereiche 604 der besseren Sichtbarkeit wegen schwarz dargestellt sind und Adsorption von Biomolekülen und Zelladhäsion ermöglichen. Die Beschichtung kann der Beschichtung 103 der in Figur 1 gezeigten Ausführungsform entsprechen oder eine andere der weiter oben aufgeführten Beschichtungstypen sein. Für solche Muster sind Abstände x von ≤ 1µm möglich. Allgemein sind Strukturen in Form von Linien und Gittern, wie in Figur 6a - 6c gezeigt, beispielsweise für die Bildung von Zellaggregaten, sowie Lokalisations-, Zellmigrations-, und Zellinteraktionsstudien, beispielsweise von Neuronen vorteilhaft. Des Weiteren sind runde oder mehreckige Flächen mit Durchmessern y von 5 µm - 2000 µm, beispielsweise zur Zellvereinzelung oder Zellaggregation möglich, wie in Figur 6j - Figur 6l gezeigt. Weiterhin sind Mischformen von Flächen, Linien und Gittern möglich, wie in Figur 6d - Figur 6i gezeigt.

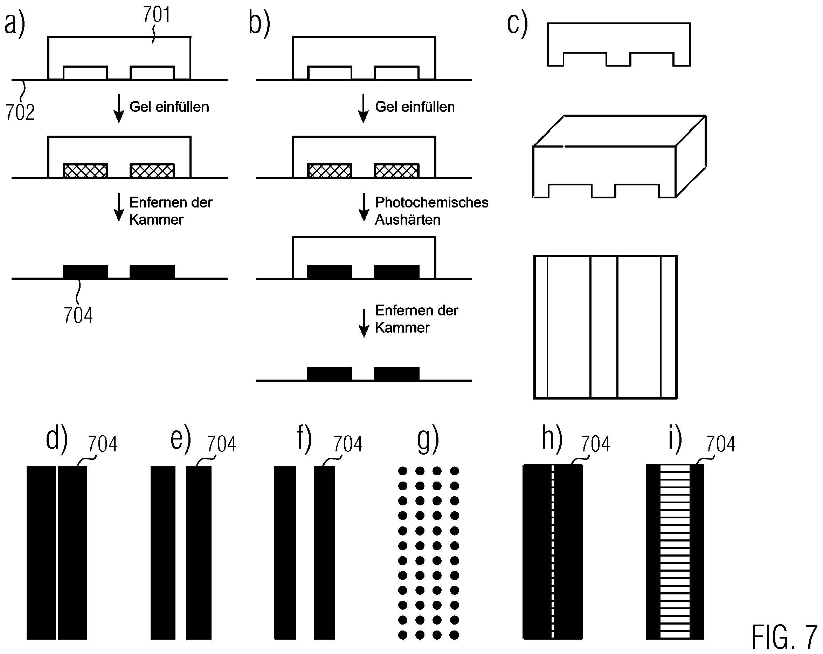

Eine Möglichkeit, die Oligomer-, oder Polymerschicht zu strukturieren, indem das zweite Bauteil mit einem entsprechend dreidimensional strukturierten PDMS-Stempelnegativ verbunden wird, ist in Figur 7 illustriert. Eine Molekül-, Oligomer- oder Polymerlösung über Kapillareffekte in die von dem Stempel und dem zweiten Bauteil gebildeten Kanalstrukturen zwischen dem zweiten Bauteil und dem Stempel gezogen werded und somit nur in den Kanalstrukturen binden. Alternativ oder zusätzlich kann der Stempel während der Vernetzung mit dem zweiten Bauteil in Kontakt bleiben, so dass sichergestellt wird, dass die Molekül-, Oligomer- oder Polymerlösung nur in den Kanalstrukturen vernetzt wird. Die Beschichtung kann der Beschichtung 103 der in Figur 1 gezeigten Ausführungsform entsprechen oder eine andere der weiter oben aufgeführten Beschichtungstypen sein.

Figur 7a und 7b zeigen einen Stempel 701 im Kontakt mit der planaren Fläche eines zweiten Bauteils 702. Es ist zu sehen, wie eine Molekül-, Oligomer- oder Polymerlösung oder ein Hydrogel 703 in die Kanäle, welche durch den Stempel 701 und das zweite Bauteil 702 gebildet werden, eingefüllt wird. Figur 7a zeigt ein Anwendungsbeispiel, bei dem die Molekül-, Oligomer- oder Polymerlösung oder das Hydrogel 703 thermisch, enzymatisch oder nasschemisch vernetzt und ausgehärtet wird, so dass es eine Oligomer- und/oder Polymerschicht ausbildet. Figur 7b zeigt ein Beispiel, in dem das Vernetzen und Aushärten über einen photochemischen Prozess erfolgt.

Eines der in Figur 7a bis 7c illustrierten Verfahren kann auch für die Strukturierung eines zusätzlich in die Probenkammer eingebrachten Hydrogels, in welches Zellen eingebettet werden können.

Figur 7c zeigt einen beispielhaften Stempel in Schnitt-, Schräg- und Draufsicht.

Figur 7d bis Figur 7i zeigen beispielhafte Strukturen, die mittels eines solchen Stempels erzeugt werden können. Solche Strukturen sind beispielsweise vorteilhaft für Migrations- und Zellintraktionsassays, wie z.B. Wundheilungsassays mit definierten Wund-, Migrations- oder Interaktionsdistanzen. Dabei zeigen Figur 7d bis 7g Strukturen aus einem Hydrogel 703, in welches Zellen eingebettet werden können, bei denen keine Interaktionspfade vorhanden sind, d.h. die Hydrogelstrukturen weisen keine Verbindungen untereinander auf. Dagegen sind in den in Figur 7h und 7i gezeigten Strukturen Interaktionspfade aus Hydrogel vorhanden.

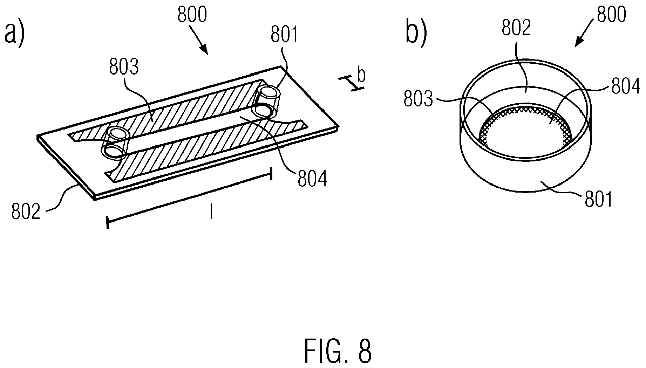

Figur 8a zeigt schematisch eine weitere Ausführungsform einer erfindungsgemäßen Probenkammer 800 in Schrägansicht. Die Probenkammer 800 umfasst ein erstes Bauteil 801 und ein zweites Bauteil 802. Hier hat das erste Bauteil 801 die Form eines bodenlosen Kanals mit hohlzylinderförmigen Aufsätzen, wobei der Kanal eine Länge I und eine Breite b besitzt. Das zweite Bauteil 802 hat die Form einer rechteckigen Platte und ist mit einer Zell- und/oder Biomolekül-abweisenden Beschichtung 803 versehen, welche eine Adhäsionsfläche 804 umgibt. Die Beschichtung kann der Beschichtung 103 der in Figur 1 gezeigten Ausführungsform entsprechen oder eine andere der weiter oben aufgeführten Beschichtungstypen sein.

Figur 8b zeigt schematisch eine weitere Ausführungsform einer erfindungsgemäßen Probenkammer 800 in Schrägansicht. Die Probenkammer 800 umfasst ein erstes Bauteil 801 und ein zweites Bauteil 802. Hier hat das erste Bauteil 801 die Form eines kreisförmigen, eine Durchgangsöffnung im Boden umfassenden Reservoirs. Die Durchgangsöffnung kann insbesondere die gesamte Bodenfläche des Reservoirs umfassen. Das zweite Bauteil 802 hat die Form einer runden Platte und ist mit einer Zell- und/oder Biomolekül-abweisenden Beschichtung 803 versehen, welche eine Adhäsionsfläche 804 umgibt. Dabei kann die Größe der Adhäsionsfläche 804 bei der Herstellung frei gewählt werden. So kann das Verhältnis des Medienvolumens zur Zellwachstumsfläche eingestellt werden. Das erste Bauteil 801 und das zweite Bauteil 802 können beispielsweise dem ersten Bauteil 101 und dem zweiten Bauteil 102 der in Figur 1 gezeigten Ausführungsform entsprechen.

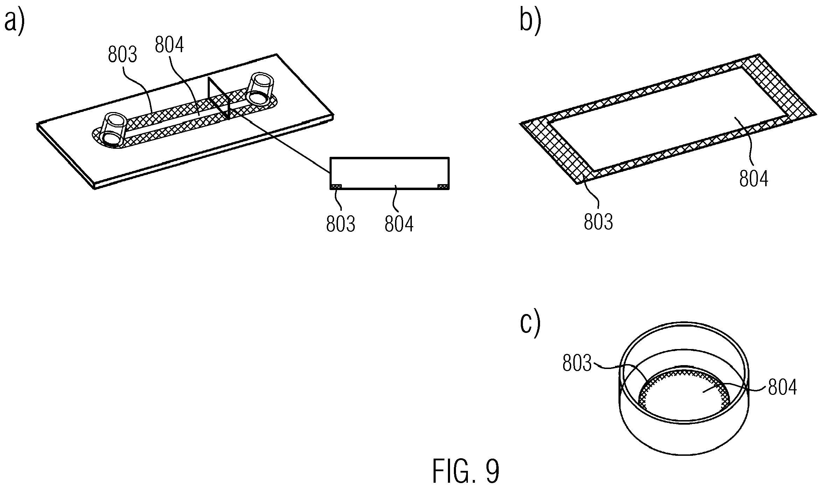

Figur 9a zeigt schematisch eine Modifikation der in Figur 8a gezeigten Ausführungsform einer erfindungsgemäßen Probenkammer. Hier ist die Beschichtung 803 so strukturiert, dass sie zwischen den Wänden des Probenreservoirs und der Adhäsionsfläche 804 einen Zell- und/oder Biomolekül-abweisenden Rahmen bildet. Dies ist in der gezeigten Schnittansicht, die einen Schnitt durch den Kanal der Probenkammer zeigt, sichtbar. Dieser Rahmen hat insbesondere eine Breite im Bereich von 1 µm bis 100 µm.

Figur 9b zeigt eine Ansicht eines zweiten Bauteils einer erfindungsgemäßen Probenkammer mit einer beispielhaften Beschichtung 803 und einem Adhäsionsbereich 804. Das zweite Bauteil kann beispielsweise dem zweiten Bauteil 802 der in Figur 8 gezeigten Ausführungsform entsprechen. Es ist zu sehen, dass die Beschichtung 803 einen Rahmen um den Adhäsionsbereich 804 bildet. Dieser Rahmen hat insbesondere eine Breite im Bereich von 1 µm bis 100 µm.

Figur 9c zeigt schematisch eine Modifikation der in Figur 8b gezeigten Ausführungsform einer erfindungsgemäßen Probenkammer. Entsprechend zu der in Figur 9a gezeigten Modifikation bildet auch hier die Beschichtung 803 zwischen den Wänden des Probenreservoirs und der Adhäsionsfläche 804 einen Zell- und/oder Biomolekül-abweisenden Rahmen. Insbesondere hat der Rahmen eine Breite im Bereich von 1 µm bis 100 µm.

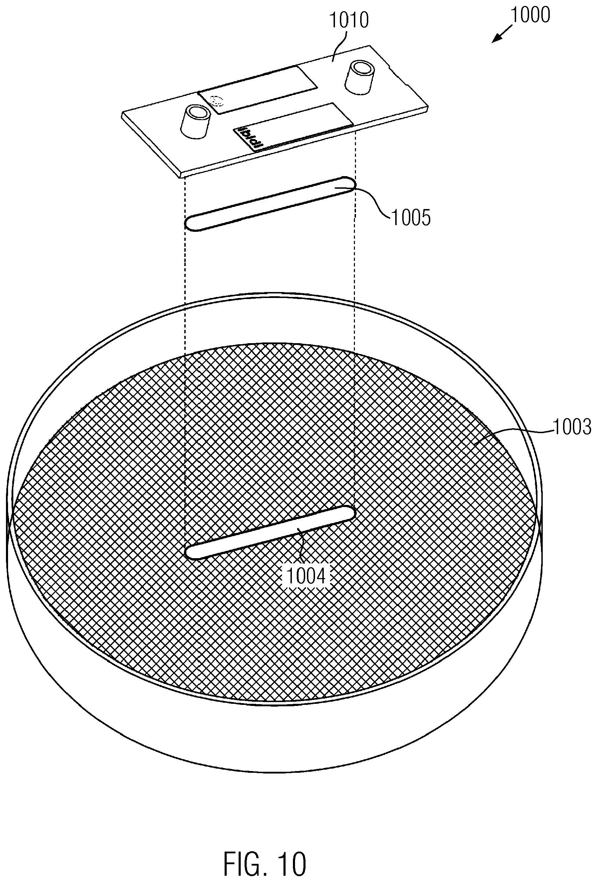

Figur 10 zeigt schematisch den Aufbau einer erfindungsgemäßen Probenkammer 1000 in Schrägdarstellung. Hierbei hat die Probenkammer 1000 die Form eines nach oben offenen Reservoirs. Auf den Boden der Probenkammer ist eine Zell- und/oder Biomolekül-abweisende Beschichtung 1003 aufgebracht, welche einen Adhäsionsbereich 1004 umgibt. Die Beschichtung kann der Beschichtung 103 der in Figur 1 gezeigten Ausführungsform entsprechen oder eine andere der weiter oben aufgeführten Beschichtungstypen sein. Hier ist der Adhäsionsbereich 1004 so dimensioniert, dass seine Größe und Form der Größe und Form des Flusskanals 1005 in der kanalförmigen Probenkammer 1010 entspricht. So kann die Zelladhäsion und/oder das Wachstum von Zellen auf der gleichen Fläche sowohl in der Probenkammer 1010 unter Strömungsbedingungen, als auch in der Probenkammer 1000 ohne Strömung untersucht werden. Die Probenkammer 1000 kann beispielsweise der Probenkammer 100 des in Figur 1 gezeigten Ausführungsbeispiels entsprechen, das heißt, sie kann ein erstes und zweites Bauteil umfassen, die jeweils dem ersten Bauteil 101 und dem zweiten Bauteil 102 entsprechen. Die Probenkammer 1010 kann beispielsweise der Probenkammer 800 des in Figur 8a gezeigten Ausführungsbeispiels entsprechen.

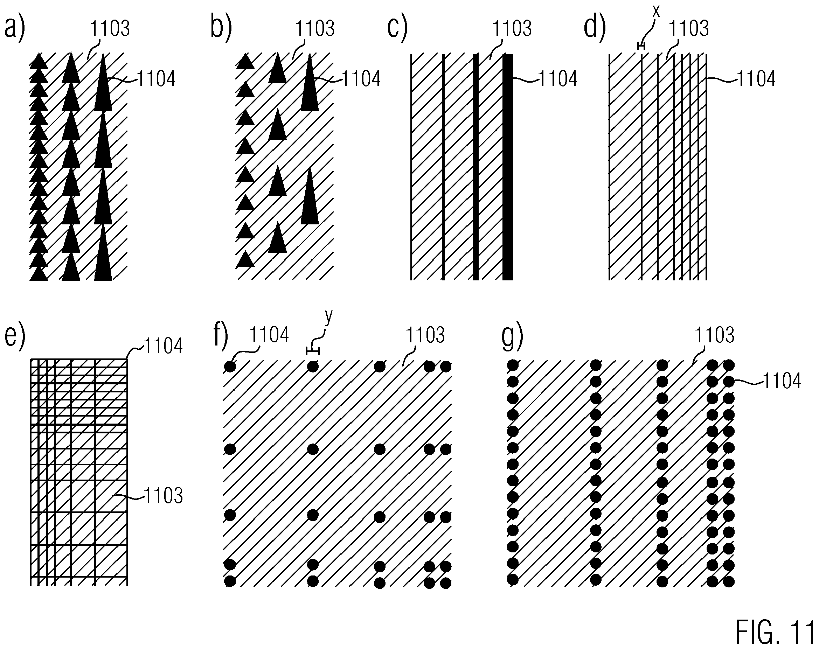

Figur 11 zeigt schematisch weitere mögliche Muster, welche von Zelladhäsionsbereichen erfindungsgemäß gebildet werden. Schraffierte Bereiche 1103 stellen hierbei beschichtete Bereiche dar, während unbeschichtete Bereiche 1104 der besseren Sichtbarkeit wegen schwarz dargestellt sind und Adsorption von Biomolekülen und Zelladhäsion ermöglichen. Die Beschichtung kann der Beschichtung 103 der in Figur 1 gezeigten Ausführungsform entsprechen oder eine andere der weiter oben aufgeführten Beschichtungstypen sein. Die Abstände x solcher Muster können insbesondere kleiner oder gleich 1 µm sein. Figuren 11c bis 11e zeigen Muster in Form von Linien und Gittern, die beispielsweise für die Erzeugung von Zellaggregaten und deren Lokalisation, Zellmigrations-, und Zellinteraktionsstudien, z.B. von Neuronen, geeignet sind.

Figuren 11a, 11b, 11f und 11g zeigen Muster aus runden oder mehreckige Flächen mit Durchmessern y von 5µm-2000µm. Diese sind zum Beispiel zur Zellvereinzelung, Zellmigration oder Zellaggregation geeignet. Die in Figur 11a und 11b gezeigten Strukturen, die eine Vielzahl von dreieckigen Flächen unterschiedlicher Größe umfassen, sind besonders geeignet, um Zellmigration und Zellinteraktion zu beeinflussen.

Mischformen der in Figur 11 gezeigten Muster sind ebenfalls möglich.

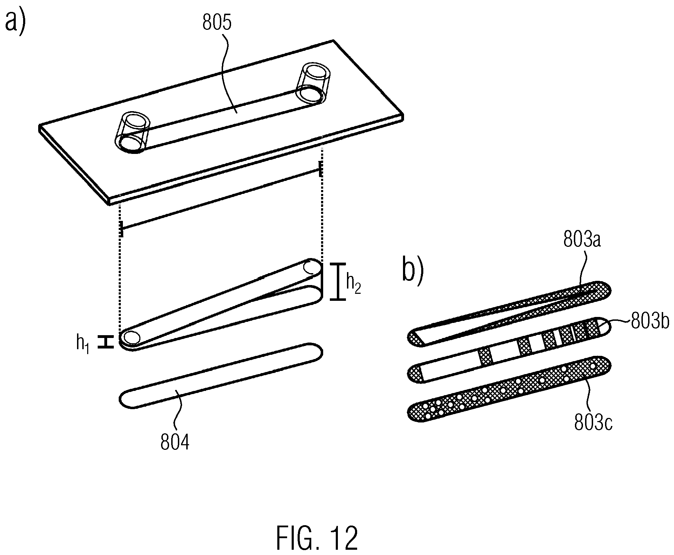

Figur 12 zeigt schematisch eine Modifikation der in Figur 8a gezeigten Ausführungsform einer erfindungsgemäßen Probenkammer. Hier weist die Beschichtung 803 ein Muster 803a, 803b, 803c auf, um die Zellkonzentration innerhalb des Probenreservoirs 805 inhomogen zu verteilen. Figur 12 zeigt zusätzlich, dass sich die Höhe des Reservoirs 805 entlang des Kanals ändert, wobei gilt, dass h₁≤h≤h₂ oder h₂≤h≤h₁. Auf diese Weise kann die im Durchflussbetrieb auf adhärierende Zellen wirkende Scherspannung entlang des Kanals verändert werden. Es ist vorteilhaft, ein Muster 803a, 803b oder 803c so zu wählen, dass sich die Gesamtgröße der zur Verfügung stehenden Adhäsionsfläche invers proportional zu der Höhe des Probenreservoirs verhält, um eine konstante Zellkonzentration entlang des Kanals zu erreichen.

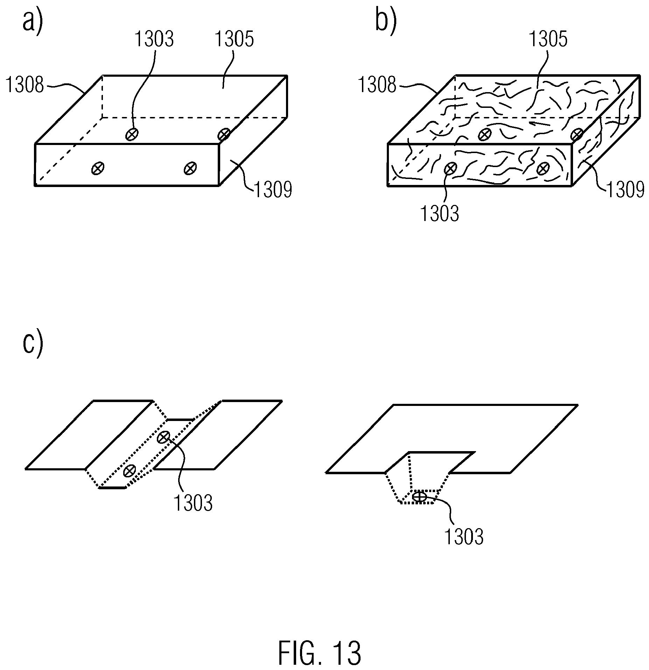

Figur 13a zeigt schematisch die Anordnung von Adhäsionsbereichen oder funktionalisierten Bereichen 1303 ein einem Probenreservoir 1305. Weiterhin zeigt Figur 13b, dass das Probenreservoir 1305 zusätzlich mit einem natürlichen oder künstlichen Hydrogel gefüllt ist, in welches Zellen eingebettet werden können. Dies wird durch die unregelmäßigen Linien angedeutet. Zwischen den Flächen 1308 und 1309 kann ein Fluss- oder Konzentrationsgradient bestehen. Figuren 13c und 13d zeigen schematisch die Anordnung von funktionalisierten Bereichen 1303 in Vertiefungen der Beschichtung. Die Beschichtung kann der Beschichtung 103 der in Figur 1 gezeigten Ausführungsform entsprechen oder eine andere der weiter oben aufgeführten Beschichtungstypen sein. Die gezeigten Vertiefungen können insbesondere in Form und Abmessungen den in Figur 5 illustrierten Vertiefungen entsprechen.

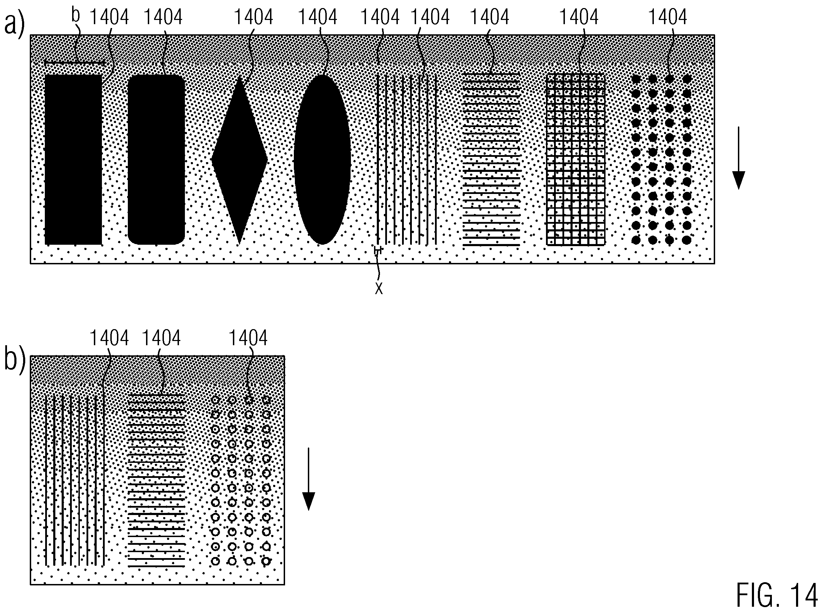

Figur 14 zeigt schematisch weitere mögliche Muster, welche von Zelladhäsionsbereichen erfindungsgemäß gebildet werden. Gepunktete Bereiche stellen hierbei beschichtete Bereiche dar. Unbeschichtete Bereiche sind der besseren Sichtbarkeit als schwarz dargestellt und ermöglichen Adsorption von Biomolekülen und Zelladhäsion. Die Beschichtung kann der Beschichtung 103 der in Figur 1 gezeigten Ausführungsform entsprechen oder eine andere der weiter oben aufgeführten Beschichtungstypen sein. Insbesondere zeigt Figur 14 mögliche Beschichtungsmuster in Kanalstrukturen, die es erlauben Druck- und/oder Konzentrationsgradienten in dem Probenreservoir aufzubauen. Dabei verläuft der Gradient in der Figur in Pfeilrichtung. Es ist möglich, die Beschichtung 1403 so aufzubringen, dass Adhäsionsflächen wie in Figur 14a gezeigt oder Migrationslinien und Gitter mit Abständen x von ≤ 1µm wie in Figur 14b gezeigt zusätzlich zu der Gradientenstruktur entstehen. Allgemein sind Mikrostrukturen in Form von Linien und Gittern vorstellbar. Auch eine Kombination der in Figur 14a und 14b dargestellten Muster und Struktruren ist möglich.

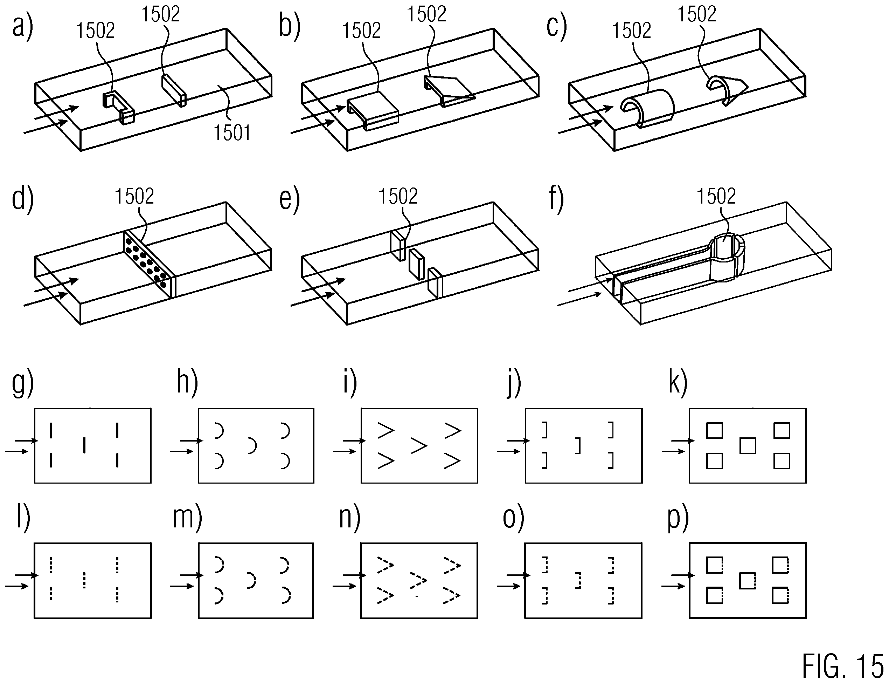

Figuren 15a bis 15f zeigen schematisch in Schrägansicht Modifikationen einer Ausführungsform einer erfindungsgemäßen Probenkammer. Dabei ist ein Teil eines als Kanal ausgebildeten Probenreservoirs mit einer Bodenfläche 1501 zu sehen, die mit einer Beschichtung bedeckt sein kann. Die Beschichtung kann der Beschichtung 103 der in Figur 1 gezeigten Ausführungsform entsprechen oder eine andere der weiter oben aufgeführten Beschichtungstypen sein. Weiterhin zeigen die Figuren Erhebungen 1502, die auf der Bodenfläche 1501 angeordnet sind. Es ist zu sehen, dass die Erhebungen 1502 verschiedene geometrische Formen annehmen können. Sie können, wie in Figuren 15a, 15d, 15e und 15f gezeigt, die Form von Wänden haben. Sie können auch, wie die Figuren 15b und 15c zeigen, die Form von Halbschalen haben. Die Erhebungen 1502 können, falls in dem Kanal ein Fluss 1503 herrscht, als Strömungsfallen wirken, welche Zellen und/oder Zellaggregate fixieren.

Die Erhebungen 1502 können relativ zueinander beliebig angeordnet sein. Die Erhebungen 1502 können beschichtet oder unbeschichtet sein. Die Höhe der Erhebungen 1502 kann 10 µm - 5000 µm betragen. Zwischen einem oberen Rand einer Erhebung 1502 und der Decke des Probenreservoirs kann, wie in Figuren 15a bis 15c gezeigt, ein Abstand bestehen. Die Erhebungen 1502 können aber auch, wie in Figuren 15d bis 15f gezeigt, die gesamte Höhe des Kanals abdecken. Die Erhebungen können eine Breite zwischen 10 µm und der Breite des Kanals aufweisen.

Wie in Figur 15d gezeigt, können die Erhebungen 1502 durchgehende Öffnungen aufweisen. Die Öffnungen können insbesondere Durchmesser aufweisen, die kleiner als 10 µm sind. Dies ist vorteilhaft, um die Strömung im Kanal effektiv ausnutzen zu können, oder um die Erhebungen als "Sieb" zu verwenden, welches nur Teilchen mit einer durch die Öffnung vorgegebenen Maximalgröße passieren können. In der in Figur 15f gezeigten Modifikation bilden die gezeigten Erhebungen 1502 einen inneren Kanal innerhalb des kanalförmigen Probenreservoirs mit einer anschließenden zylinderförmigen Kammer aus. Dabei sind in der gezeigten Modifikation der innere Kanal und die Kammer mittels Öffnungen mit dem Rest des Probenreservoirs verbunden. Ein solcher innerer Kanal kann eine Länge von 100 µm bis zur Gesamtlänge des Probenreservoirs aufweisen. Die gebildete Kammer kann einen inneren Durchmesser von 100 µm bis 2000 µm aufweisen. Die Öffnungen können eine lichte Weite von weniger als 10 µm aufweisen.

Figuren 15g bis 15p zeigen weitere mögliche Modifikationen und Anordnungen der Erhebungen 1502 in Draufsicht. Hierbei deuten die in Figuren 15l bis 15p gezeigten gepunkteten Linien an, dass in diesen Elementen Durchgangsöffnungen wie oben beschrieben vorliegen.

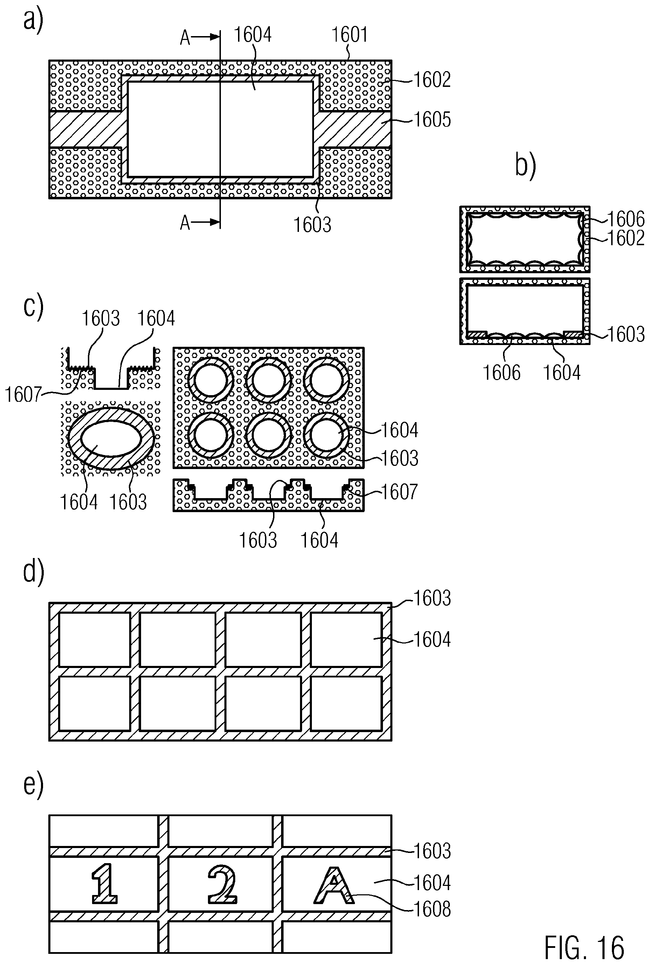

Figur 16 zeigt schematisch beispielhafte Anwendungen erfindungsgemäßer Probenkammern.

In Figur 16a zeigt eine Schnittansicht durch ein kanalförmiges Probenreservoir 1601 in Draufsicht. Zu sehen sind die Seitenwände 1602 des Probenreservoirs. Schraffierte Bereiche zeigen Bereiche des Probenreservoirs 1601, die mit einer erfindungsgemäßen Beschichtung 1603 versehen sind. Die Beschichtung kann der Beschichtung 103 der in Figur 1 gezeigten Ausführungsform entsprechen oder eine andere der weiter oben aufgeführten Beschichtungstypen sein. Es ist zu erkennen, dass die Beschichtung 1603 die Zulaufkanäle 1605 bedeckt, und zudem entlang des inneren Randes der Seitenwände 1602 verläuft. Hier kann die Beschichtung eine Breite von 1 µm bis 10 µm aufweisen. So wird Zell- und Biomoleküladhäsion in den Zulaufkanälen und an den Seitenwänden verhindert, und auf den Adhäsionsbereich 1604 beschränkt.

Figur 16b zeigt im unteren Teilbild einen Schnitt entlang der Linie A - A' durch das in Figur 16a gezeigte Probenreservoir 1601 in Durchflussrichtung. Es ist zusätzlich gezeigt, wie im Adhäsionsbereich 1604 Zellwachstum 1606 auftritt. Es ist zu erkennen, dass die Beschichtung 1603 Zellwachstum an den Seitenwänden verhindert.

Zum Vergleich zeigt das obere Teilbild der Figur 16b eine entsprechende Schnittdarstellung durch ein Probenreservoir mit gleicher Geometrie, aber ohne Beschichtung 1603. Es ist zu sehen, dass Zellwachstum 1606 an allen Wänden des Probenreservoirs stattfindet.

Figur 16c zeigt in Schnitt- und Draufsicht schematisch Reservoirstrukturen mit mehreren Stufen. Die Stufen können beispielsweise durch abgestufte Vertiefungen in der Bodenfläche des Probenreservoirs gebildet werden. In Figur 16d ist zu sehen, dass die Stufenflächen 1607 mit einer erfindungsgemäßen Beschichtung 1603 versehen sind. Damit kann die Zelladhäsion auf die Bodenbereiche 1604 der Reservoirstrukturen beschränkt werden.

Figur 16d zeigt schematisch einen Ausschnitt einer Ausführungsform eines erfindungsgemäßen Probenreservoirs in Draufsicht. Es ist zu sehen, dass die erfindungsgemäße Beschichtung 1603 Gitterstrukturen bildet. Dabei können die beschichteten Bereiche eine Breite von 1 µm bis 1000 µm aufweisen. So entsteht eine Vielzahl von Adhäsionsbereichen 1604. Dies ermöglicht eine Co-Kultur verschiedener Zelltypen oder Zellgenotypen bei identischen Wachstumsbedingungen. Figur 16e zeigt acht solche Adhäsionsbereiche, es kann aber eine beliebige Anzahl von Adhäsionsbereichen 1604 vorliegen.

Figur 16e zeigt eine Modifikation der in Figur 16d gezeigten Ausführungsform. Es ist eine vergrößerte Ansicht dreier Adhäsionsbereiche 1604 mit umgebender Beschichtung 1603 zu sehen. Weiterhin ist gezeigt, dass die Adhäsionsbereiche mit Wiederfindungsstrukturen 1608 versehen sind. Solche Wiederfindungsstrukturen, die beispielsweise für korrelative Fluoreszenz- und Elekronenmikroskopie (CLEM) verwendet werden, können beispielsweise durch Ätzen, Prägen oder Lasern in der Bodenfläche des Probenreservoirs aufgebracht sein. Es ist zu sehen, dass die Beschichtung 1603 auch auf die Wiederfindungsstrukturen 1608 aufgebracht ist. So kann ein Bewachsen der Wiederfindungsstrukturen 1608 verhindert werden, welche dadurch nicht an Sichtbarkeit verlieren.

Es versteht sich, dass in den zuvor beschriebenen Ausführungsbeispielen genannte Merkmale nicht auf diese speziellen Kombinationen beschränkt sind und auch in beliebigen anderen Kombinationen möglich sind. Außerdem ist auch die Geometrie der Reservoire nicht auf die in den Figuren gezeigten Formen beschränkt. Es sind auch beliebige andere Geometrien möglich.

## Patentansprüche

1. Probenkammer umfassend
ein erstes Bauteil;
ein damit verbundenes zweites Bauteil; und
ein Probenreservoir, welches von dem ersten und dem zweiten Bauteil begrenzt wird,
wobei die Seitenwände und/oder die Decke des Probenreservoirs durch das erste Bauteil und der Boden des Probenreservoirs durch das zweite Bauteil ausgebildet sind,
wobei der Boden des Probenreservoirs eine planare Fläche umfasst, die eine Beschichtung aufweist, und
wobei die Beschichtung von einer Oligomer- und/oder Polymerschicht gebildet wird, welche Zell- und/oder Biomolekül-abweisend ist.

2. Probenkammer gemäß Anspruch 1, wobei die planare Fläche mindestens einen vorherbestimmten Zelladhäsionsbereich umfasst, der nicht von der Beschichtung bedeckt ist.

3. Probenkammer gemäß einem der vorhergehenden Ansprüche, wobei die planare Fläche eine Vielzahl von Zelladhäsionsbereichen und/oder Beschichtungsbereichen umfasst.

4. Probenkammer gemäß Anspruch 3, wobei sich der Abstand zwischen benachbarten Zelladhäsionsbereichen und/oder die Größe der Flächen benachbarter Zelladhäsionsbereiche sich entlang einer geraden Richtung monoton, insbesondere streng monoton, ändert.

5. Probenkammer gemäß einem der vorhergehenden Ansprüche, wobei die Beschichtung eine oder mehrere lokal begrenzte Vertiefungen umfasst, wobei die Beschichtung den Boden der Vertiefungen umfasst.

6. Probenkammer gemäß einem der vorhergehenden Ansprüche,
wobei die Beschichtung eine konstante Schichtdicke von weniger als 1 µm, insbesondere von weniger als 500 nm aufweist, oder
wobei, wenn die Beschichtung Vertiefungen aufweist, die durch eine Änderung der Schichtdicke gebildet werden, die Schichtdicke außerhalb der Vertiefungen eine konstante Schichtdicke von weniger als 2000 µm aufweist, und im Bereich der Vertiefungen eine Schichtdicke von weniger als 1 µm, insbesondere weniger als 500 nm aufweist.

7. Probenkammer gemäß einem der vorhergehenden Ansprüche, wobei die Beschichtung entlang der und direkt angrenzend an eine Seitenwand des Probenreservoirs verläuft.

8. Probenkammer gemäß einem der vorhergehenden Ansprüche, wobei die Beschichtung hydrophile Eigenschaften hat und/oder für Zellen nicht toxisch ist.

9. Probenkammer gemäß einem der vorhergehenden Ansprüche, wobei die Beschichtung Polyether und/oder Polyole und/oder Polyamide und/oder Polymethacrylate und/oder Polyhydroxymethylmethacrylate und/oder Polysaccharide und/oder Polyamine und/oder Polypeptide umfasst, wobei die Beschichtung insbesondere Polyvinylalkohol, PVA, umfasst.

10. Probenkammer gemäß einem der vorhergehenden Ansprüche, wobei die Oberfläche der Beschichtung in vorherbestimmten Bereichen Moleküle und/oder Oligomere und/oder Polymere umfasst, an denen Zelladhäsion möglich ist.

11. Probenkammer gemäß einem der vorhergehenden Ansprüche, wobei das Probenreservoir eine Öffnung und/oder einen Hohlraum umfasst, wobei die Öffnung und/oder der Hohlraum durch eine durchgehende Öffnung und/oder eine Vertiefung im ersten Bauteil ausgebildet sind.

12. Probenkammer gemäß einem der vorhergehenden Ansprüche, wobei das zweite Bauteil ein flächiges Element ist, wobei das flächige Element insbesondere eine Dicke von 50 bis 250 µm, vorzugsweise 100 bis 200 µm, aufweist.

13. Probenkammer gemäß einem der vorhergehenden Ansprüche, wobei das zweite Bauteil eine oder mehrere Erhebungen und/oder Vertiefungen aufweist, wobei die Erhebungen und/oder Vertiefungen mit der Beschichtung bedeckt sind.

14. Probenkammer gemäß einem der vorhergehenden Ansprüche, wobei das erste Bauteil und/oder das zweite Bauteil einen Kunststoff und/oder ein Elastomer umfassen und/oder das zweite Bauteil ein Glas umfasst.

15. Verfahren zur Herstellung einer Probenkammer, insbesondere gemäß einem der vorhergehenden Ansprüche, umfassend die Schritte:
Bereitstellen eines ersten Bauteils;
Bereitstellen eines zweiten Bauteils, wobei das zweite Bauteil eine planare Fläche umfasst;
Beschichten der planaren Fläche mit einer Oligomer- und/oder Polymerschicht, welche Zell- und/oder Biomolekül-abweisend ist; und
Verbinden des ersten Bauteils mit dem zweiten Bauteil, so dass ein Probenreservoir entsteht, welches von dem ersten und dem zweiten Bauteil begrenzt wird, wobei die Seitenwände und/oder die Decke des Probenreservoirs durch das erste Bauteil und der Boden des Probenreservoirs durch das zweite Bauteil ausgebildet sind.

16. Verfahren zur Herstellung einer Probenkammer gemäß Anspruch 15, wobei das Beschichten der planaren Fläche eine Strukturierung der Beschichtung mittels eines formgebenden Stempels umfasst.

17. Verfahren zur Herstellung einer Probenkammer gemäß einem der Ansprüche 15 oder 16,
wobei die Bereitstellung des zweiten Bauteils die Extrusion des zweiten Bauteils umfasst, und
wobei das Beschichten des zweiten Bauteils die Co-Extrusion einer Polymerschicht zusammen mit dem zweiten Bauteil umfasst.
